# EUROPEAN PATENT SPECIFICATION

(11) **EP 3 188 564 B1**
(45) Date of publication and mention of the grant of the patent: **12.05.2021**
(21) Application number: 15836352.3
(22) Date of filing: 31.08.2015
(51) Int. Cl.: H04W 72/12, H04W 84/12, H04W 74/04

(54) **METHOD AND DEVICE BY WHICH STATION TRANSMITS SIGNAL IN WIRELESS COMMUNICATION SYSTEM**
VERFAHREN UND VORRICHTUNG ZUR ÜBERTRAGUNG EINES SIGNALS VON EINER STATION IN EINEM DRAHTLOSKOMMUNIKATIONSSYSTEM
PROCÉDÉ ET DISPOSITIF AU MOYEN DESQUELS UNE STATION ÉMET UN SIGNAL DANS UN SYSTÈME DE COMMUNICATION SANS FIL

(30) Priority: 31.08.2014 US 201462044308 P
(43) Date of publication of application: 05.07.2017
(73) Proprietor: LG Electronics Inc., Seoul 07336 (KR)
(72) Inventor: KIM, Jeongki, Seoul 06772 (KR); CHOI, Jinsoo, Seoul 06772 (KR); RYU, Kiseon, Seoul 06772 (KR); CHO, Hangyu, Seoul 06772 (KR)
(74) Representative: Plasseraud IP
(86) International application number: PCT/KR2015/009116
(87) International publication number: WO 2016/032302

(56) References cited:
- KR-A- 20090 019 584
- KR-A- 20130 142 947
- US-A1- 2008 225 783
- JINYOUNG CHUN (LG ELECTRONICS): "Consideration on UL MU transmission ; 11-14-0802-00-00ax-consideration-on-ul-mu- transmission", IEEE DRAFT; 11-14-0802-00-00AX-CONSIDERATION-ON-UL-MU- TRANSMISSION, IEEE-SA MENTOR, PISCATAWAY, NJ USA, vol. 802.11ax, 14 July 2014 (2014-07-14), pages 1-10, XP068069534, [retrieved on 2014-07-14]
- MINYOUNG PARK (INTEL CORP): "Proposed TGah Draft Amendment ; 11-13-0500-00-00ah-proposed-tgah-draft-ame ndment", IEEE SA MENTOR; 11-13-0500-00-00AH-PROPOSED-TGAH-DRAFT-AME NDMENT, IEEE-SA MENTOR, PISCATAWAY, NJ USA, vol. 802.11ah, 10 May 2013 (2013-05-10), pages 1-330, XP068054010, [retrieved on 2013-05-10]
- SUN ET AL.: 'IEEE 802.11ah: A Long Range 802.11WLAN at Sub 1 GHz' JOURNAL OF ICT STANDARDIZATION, [Online] vol. 1, no. 1, 01 July 2013, pages 83 - 108, XP055155803 DOI: 10.13052/JICTS2245-800X Retrieved from the Internet: <URL:HTTP://RIVERPUBLISHERS.COM/JOURNALDOWN LOAD.PHP?FILE=RP_JOURNAL_2245-800X_115.PDF>
- 'UNIVERSAL MOBILE TELECOMMUNICATIONS SYSTEM (UMTS); LTE; 3GPP SYSTEM TO WIRELESS LOCAL AREA NETWORK (WLAN) INTERWORKING; SYSTEM DESCRIPTION (3GPP TS 23.234 VERSION 11.0.0 RELEASE 11)' ETSI TS 123 234 V11.0.0, [Online] 01 September 2012, pages 1 - 86, XP055411975 Retrieved from the Internet: <URL:http://www.etsi.org/dehver/etsi_ts/123 200_123299/123234/11.00.00_60>

## Description

### [Technical Field]

The present disclosure relates to a wireless communication system, and more particularly, to a method and device for transmitting a signal by a station in a wireless communication system.

### [Background Art]

While a signal transmission method proposed below is applicable to various types of wireless communication, a Wireless Local Area Network (WLAN) system will be described as an exemplary system to which the present disclosure is applicable.

WLAN Standards have been developed as Institute of Electrical and Electronics Engineers (IEEE) 802.11. IEEE 802.11a and b use an unlicensed band at 2.4 GHz or 5 GHz. IEEE 802.11b provides a transmission rate of 11 Mbps and IEEE 802.11a provides a transmission rate of 54 Mbps. IEEE 802.11g provides a transmission rate of 54 Mbps by applying Orthogonal Frequency Division Multiplexing (OFDM) at 2.4 GHz. IEEE 802.11n provides a transmission rate of 300 Mbps for four spatial streams by applying Multiple Input Multiple Output (MIMO)-OFDM. IEEE 802.11n supports a channel bandwidth of up to 40 MHz and, in this case, provides a transmission rate of 600 Mbps.

The above-described WLAN standards have evolved into IEEE 802.11ac that uses a bandwidth of up to 160 MHz and supports a transmission rate of up to 1 Gbits/s for 8 spatial streams and IEEE 802.11ax standards are under discussion.

Considerations on uplink multiuser transmission are presented in the document IEEE 11-14/0802r0 of July 2014.

### [Disclosure]

### [Technical Problem]

An object of the present invention devised to solve the problem lies in a method and device for transmitting a signal by an STA in a wireless communication system.

It is another object of the present invention to provide a method of improving the efficiency of use of radio resources by configuring a frame transmitted by an STA as an NDP (Null Data Packet) frame in a wireless communication system to reduce unnecessary information, preventing waste of resources.

It is another object of the present invention to provide a method for configuring a format of a trigger frame based on an NDP frame when a frame transmitted by an STA is configured as the NDP frame in a wireless communication system.

### [Technical Solution]

The invention is defined by the appended claims.

The following description may be commonly applied to the embodiments of the present invention.

### [Advantageous Effects]

According to an aspect of the present invention, a method and apparatus for transmitting a signal by a station in a wireless communication system may be provided.

According to an aspect of the present invention, there may be provided a method for improving efficiency of use of radio resources by preventing waste of resources by reducing unnecessary information by configuring a frame transmitted by a station as an NDP (Null Data Packet) frame in a wireless communication system.

According to an aspect of the present invention, there may be provided a method for configuring a format of a trigger frame based on an NDP frame when a frame transmitted by a station is configured as an NDP frame in a wireless communication system.

The effects that may be obtained by the present invention are not limited to the above-mentioned effects, and other effects not mentioned herein may be clearly understood from the following description by those skilled in the art to which the present invention pertains.

### [Description of Drawings]

FIG. 1 is a diagram illustrating an example of configuration of a WLAN system.
FIG. 2 is a diagram illustrating another example of configuration of a WLAN system.
FIG. 3 is a diagram illustrating an exemplary structure of a WLAN system.
FIG. 4 is a diagram illustrating a link setup procedure in a WLAN system
FIG. 5 illustrates an active scanning method and a passive scanning method.
FIG. 6 is a diagram illustrating a DCF mechanism in a WLAN system.
FIGs. 7 and 8 are exemplary diagrams illustrating the issue of the existing conflict resolution mechanism.
FIG. 9 is a diagram illustrating a mechanism for solving a hidden node problem using an RTS/CTS frame.
FIG. 10 is a diagram illustrating a mechanism for solving an exposed node problem using an RTS/CTS frame.
FIGs. 11 to 13 are diagrams illustrating operation of an STA receiving a TIM in detail.
FIGs. 14 to 18 are diagrams illustrating an example of a frame structure used in the IEEE 802.11 system.
FIGs. 19 to 21 are diagrams illustrating a MAC frame format.
FIG. 22 is a diagram illustrating a Short MAC frame format.
FIG. 23 is a diagram illustrating an example of a PPDU format.
FIG. 24 is a diagram illustrating a method for performing uplink multi-user (UL MU) transmission in an AP STA and a non-AP STA.
FIG. 25 is a diagram illustrating a method for transmitting a PS-Poll based on UL MU;
FIG. 26 is a diagram illustrating a structure of an NDP frame transmitted by a plurality of STAs.
FIGs. 27 and 28 are diagrams illustrating a method for transmitting an NDP frame by a plurality of STAs based on a trigger frame.
FIG. 29 is a diagram illustrating another example of the PPDU format.
FIG. 30 is a diagram illustrating an NDP frame and a corresponding trigger frame according to an embodiment of the present invention.
FIG. 31 is a diagram illustrating a case where the trigger frame is a MAC control frame.
FIG. 32 is a diagram illustrating an example of a trigger frame information field format included in a trigger frame.
FIG. 33 is a diagram illustrating the format of a Trigger Frame Body part ased on allocation type information.
FIG. 34 is a diagram illustrating an example of a format in which allocation information about an NDP frame is included in a Trigger Frame Body part.
FIG. 35 is a diagram illustrating an NDP trigger frame format.
FIG. 36 is a flowchart illustrating a method for transmitting a signal by an STA.
FIG. 37 is a block diagram illustrating an exemplary configuration of an AP (or a BS) and an STA (or a terminal).
FIG. 38 illustrates an exemplary structure of a processor of an AP or an STA.

### [Best Mode]

The invention now will be described more fully hereinafter with reference to the accompanying drawings, in which embodiments of the invention are shown. This invention may, however, be embodied in many different forms and should not be construed as limited to the embodiments set forth herein.

Examples described hereinbelow are combinations of elements and features of the present invention. The elements or features may be considered selective unless otherwise mentioned. Each element or feature may be practiced without being combined with other elements or features. Further, an example may be constructed by combining parts of the elements and/or features. Operation orders described in examples of the present invention may be rearranged. Some constructions of any one example may be included in another embodiment and may be replaced with corresponding constructions of another example.

Specific terms used in the embodiments of the present invention are provided to aid in understanding of the present invention. These specific terms may be replaced with other terms within the scope of the present invention.

In some cases, to prevent the concept of the present invention from being obscured, structures and apparatuses of the known art will be omitted, or will be shown in the form of a block diagram based on main functions of each structure and apparatus. In addition, wherever possible, the same reference numbers will be used throughout the drawings and the specification to refer to the same or like parts.

The embodiments of the present invention can be supported by standard documents disclosed for at least one of wireless access systems, Institute of Electrical and Electronics Engineers (IEEE) 802, 3rd Generation Partnership Project (3GPP), 3GPP Long Term Evolution (3GPP LTE), LTE-Advanced (LTE-A), and 3GPP2. Steps or parts that are not described to clarify the technical features of the present invention can be supported by those documents. Further, all terms as set forth herein can be explained by the standard documents.

Techniques described herein can be used in various wireless access systems such as Code Division Multiple Access (CDMA), Frequency Division Multiple Access (FDMA), Time Division Multiple Access (TDMA), Orthogonal Frequency Division Multiple Access (OFDMA), Single Carrier-Frequency Division Multiple Access (SC-FDMA), etc. CDMA may be implemented as a radio technology such as Universal Terrestrial Radio Access (UTRA) or CDMA2000. TDMA may be implemented as a radio technology such as Global System for Mobile communications (GSM)/General Packet Radio Service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, Evolved-UTRA (E-UTRA) etc. For clarity, this application focuses on the IEEE 802.11 system. However, the technical features of the present invention are not limited thereto.

In the present disclosure, a terminology, each of which includes such an ordinal number as 1st, 2nd and the like, may be used to describe various components. In doing so, the various components should be non-limited by the corresponding terminologies, respectively. The terminologies are only used for the purpose of discriminating one component from other components. For example, a first configuration element can be referred to as a second configuration element, similarly, the second configuration element can be referred to as the first configuration element.

In the present application, such a terminology as 'comprise', 'include' and the like should be construed not as excluding existence of a different configuration element but as designating frther existence of a different configuration element. In this disclosure, such a terminology as '...unit', '...part' corresponds to a unit for processing at least one or more functions or operations. The unit can be implemented by a combination of hardware and/or software.

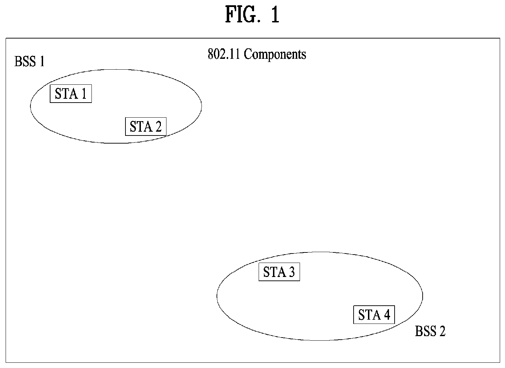

FIG. 1 is a view illustrating an exemplary configuration of a Wireless Local Area Network (WLAN) system.

As depicted in FIG. 1, a wireless local area network includes at least one Basic Service Set (BSS). The BSS is a set of Stations (STA) capable of communicating with each other by successfully performing synchronization.

The STA is a logical entity including a physical layer interface for a Medium Access Control (MAC) and wireless media. The STA includes an Access Point (AP) and a Non-AP STA. A mobile terminal operated by a user corresponds to the Non-AP STA among the STAs. If it is simply called an STA, the STA may correspond to the Non-AP STA. The Non-AP STA can be called such a different name as a terminal, a Wireless Transmit/Receive Unit (WTRU), User Equipment (UE), a Mobile Station (MS), a Mobile Terminal, a Mobile Subscriber Unit, or the like.

And, the AP is an entity providing an STA associated to the AP with an access to a Distribution System (DS) via the wireless media. The AP can be called a concentrated controller, a Base Station (BS), a Node-B, a Base Transceiver System (BTS), a site controller, or the like.

The BSS can be divided into an infrastructure BSS and an Independent BSS (IBSS).

The BSS depicted in FIG. 1 corresponds to the IBSS. The IBSS means the BSS not including an AP. Since the IBSS does not include the AP, an access to the DS is not permitted to the IBSS. Thus, the IBSS forms a self-contained network.

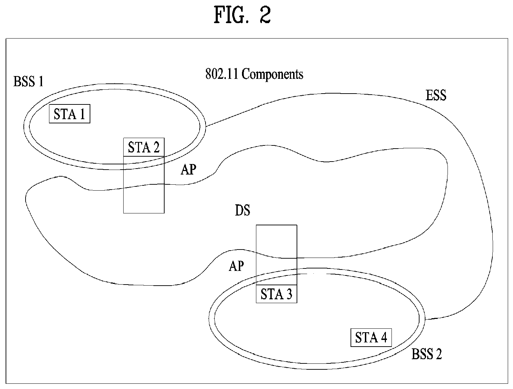

FIG. 2 is a view illustrating another exemplary configuration of a WLAN system.

The BSS depicted in FIG. 2 corresponds to the infrastructure BSS. The infrastructure BSS includes at least one STA and an AP. Although a principle of a communication between non-AP STAs is to perform the communication via the AP, if a link is directly established between the non-AP STAs, it is possible to directly communicate between the non-AP STAs.

As depicted in FIG. 2, a plurality of infrastructure BSSs can be connected to each other via the DS. A plurality of the infrastructure BSSs connected through the DS is called an Extended Service Set (ESS). STAs included in the ESS can communicate with each other and a non-AP STA can move from one BSS to another BSS while seamlessly communicating in an identical ESS.

The DS is a mechanism connecting a plurality of APs to each other and the DS is not necessarily to be a network. If the DS is able to provide a prescribed distribution service, there is no limit on a form of the DS. For instance, the DS may correspond to such a wireless network as a mesh network or may correspond to a physical structure connecting APs to each other.

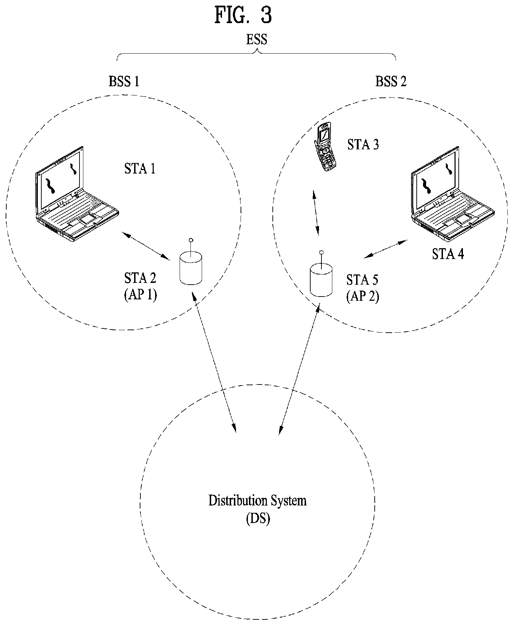

FIG. 3 is a view illustrating an exemplary structure of a WLAN system. In FIG. 3, an example of an infrastructure BSS including a DS is described.

Referring to an example of FIG. 3, ESS includes a BSS1 and BSS2. In a WLAN system, a station corresponds to a device operating according to MAC/PHY regulation of IEEE 802.11. A station includes an AP station and a non-AP station. In general, the non-AP station corresponds to such a device directly handled by a user as a laptop computer, a mobile phone, and the like. In the example of FIG. 3, a station 1, a station 3, and a station 4 correspond to the non-AP station and a station 2 and a station 5 correspond to the AP station.

In the following description, the non-AP station may be referred to as a terminal, a Wireless Transmit/Receive Unit (WTRU), a User Equipment (UE), a Mobile Station (MS), a mobile terminal, a Mobile Subscriber Station (MSS), and the like. And, the AP corresponds to a Base Station (BS), a Node-B, an evolved Node-B (eNB), a Base Transceiver System (BTS), a femto BS, and the like.

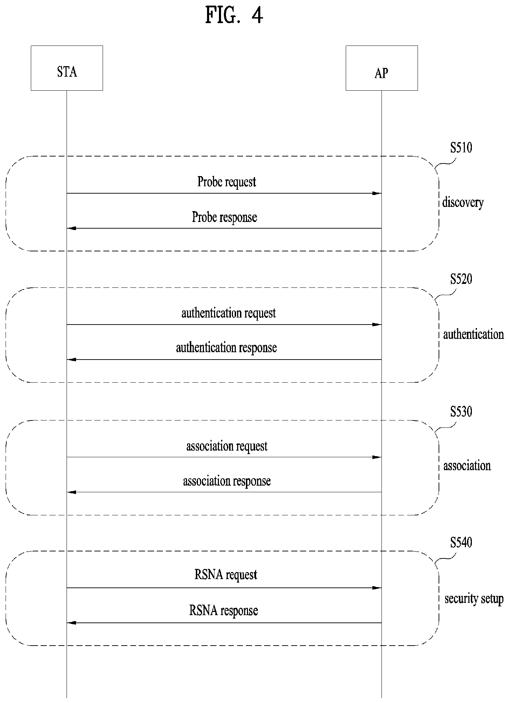

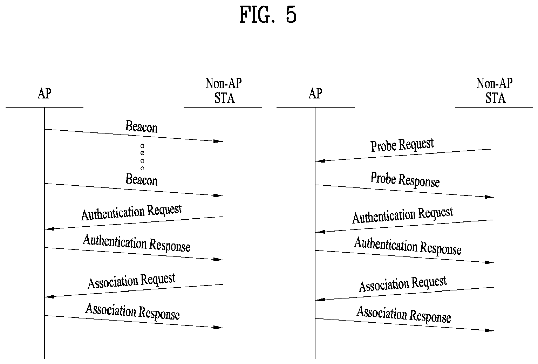

FIG. 4 is a flowchart illustrating a link setup procedure in a WLAN system, and FIG. 5 is a view illustrating an active scanning method and a passive scanning method.

In order for an STA to set up a link with a network and transceive data with the network, it is necessary for the station to discover the network, perform authentication, establish association, and pass through an authentication procedure for security. The link setup procedure can also be referred to as a session initiation procedure or a session setup procedure. And, discovery, authentication, association, and security setup procedures of the link setup procedure can be commonly called an association procedure.

An example of the link setup procedure is explained in the following with reference to FIG. 4.

In the step S410, an STA can perform a network discovery operation. The network discovery operation can include a scanning operation of the STA. In particular, in order for the STA to access a network, it is necessary for the STA to find out a network in which the STA is able to participate. The STA needs to identify a compatible network before participating in a wireless network. A procedure of identifying a network existing at a specific region is called scanning.

A scanning scheme includes active scanning and passive scanning. In FIG. 4, although a network discovery operation including an active scanning procedure is explained for example, an STA may operate with a passive scanning procedure.

According to the active scanning, a scanning performing STA transmits a probe request frame to a responder to discover an AP existing in the vicinity of the STA and waits for a response. The responder transmits a probe response frame to the STA, which has transmitted the probe request frame, in response to the probe request frame. In this case, the responder may correspond to an STA, which has lastly transmitted a beacon frame in a BSS on a channel being scanned. In the BSS, since an AP transmits a beacon frame, the AP becomes the responder. In an IBSS, since STAs in the IBSS alternately transmit a beacon, the responder is not fixed. For example, if an STA transmits a probe request frame on a channel 1 and receives a probe response frame on the channel 1, the STA stores BSS-related information included in the received probe response frame, moves to a next channel (e.g., a channel 2), and may be able to perform scanning (i.e., transmit and receive a probe request/response on the channel 2) using an identical method.

Referring to FIG. 5, scanning can also be performed by a passive scanning scheme. According to the passive scanning, a scanning performing STA waits for a beacon frame while switching a channel. A beacon frame is one of management frames in IEEE 802.11. The beacon frame is periodically transmitted to notify the existence of a wireless network and make the scanning performing STA discover and participate in the wireless network. In a BSS, an AP plays a role in periodically transmitting a beacon frame. In an IBSS, STAs belonging to the IBSS alternately transmit a beacon frame. Having received a beacon frame, the scanning performing STA stores information on the BSS included in the beacon frame and records beacon frame information on each channel while switching to a different channel. Having received a beacon frame, an STA stores BSS-related information included in the received beacon frame, moves to a next channel, and may be able to perform scanning on the next channel using an identical method.

When the active scanning and the passive scanning are compared, the active scanning has a merit in that delay is less and power consumption is lower compared to the passive scanning.

After the network is discovered by the STA, an authentication procedure can be performed in the step S420. In order to clearly distinguish the authentication procedure from a security setup operation of the step S440, the authentication procedure can be referred to as a first authentication procedure.

According to the authentication procedure, the STA transmits an authentication request frame to the AP and the AP transmits an authentication response frame to the STA in response to the authentication request frame. An authentication frame used in the authentication request/response corresponds to a management frame.

The authentication frame include information on an authentication algorithm number, an authentication transaction sequence number, a status code, a challenge text, a Robust Security Network (RSN), a finite cyclic group, and the like. The above-mentioned information is just an example of information capable of being included in the authentication request/response. The information can be replaced with different information or may further include additional information.

The STA can transmit the authentication request frame to the AP. The AP can determine whether to grant authentication on the STA based on the information included in the received authentication request frame. The AP can transmit a result of the authentication procedure to the STA via the authentication response frame.

If the STA is successfully authenticated, an association procedure can be performed in the step S430. According to the association procedure, the STA transmits an association request frame to the AP and the AP transmits an association response frame to the STA in response to the association request frame.

For example, the association request frame can include such information as information related to various capabilities, a beacon listening interval, an SSID (service set identifier), supported rates, supported channels, an RSN, a mobility domain, supported operating classes, a TIM (traffic indication map broadcast request), interworking service capability, and the like.

For example, the association response frame can include such information as information related to various capabilities, a status code, an Association ID (AID), supported rates, an Enhanced Distributed Channel Access (EDCA), a parameter set, a Received Channel Power Indicator (RCPI), a Received Signal to Noise Indicator (RSNI), a mobility domain, a timeout interval (association comeback time), an overlapped BSS scan parameter, TIM broadcasting response, QoS map, and the like.

The above-mentioned information is just an example of information capable of being included in the association request/response frame. The information can be replaced with different information or may further include additional information.

If the STA is successfully associated with the network, the security setup procedure can be performed in the step S540. The security setup procedure of the step S440 can also be referred to as an authentication procedure via an RSNA (robust security network association) request/response. The authentication procedure of the step S520 can be referred to as a first authentication procedure and the security setup procedure of the step S540 can be simply referred to as an authentication procedure.

For example, the security setup procedure of the step S440 may include a private key setup procedure via 4-way handshaking through an Extensible Authentication Protocol over LAN (EAPOL) frame. And, the security setup procedure can also be performed according to a security scheme not defined in IEEE 802.11 standard.

Based on the aforementioned discussion, a collision detection technique in a WLAN system is explained in the following.

As mentioned in the foregoing description, since various elements influence on a channel in wireless environment, a transmitting end is unable to precisely detect a collision. Hence, 802.11 has introduced a Distributed Coordination Function (DCF) corresponding to a Carrier Sense Multiple Access/Collision Avoidance (CSMA/CA) mechanism.

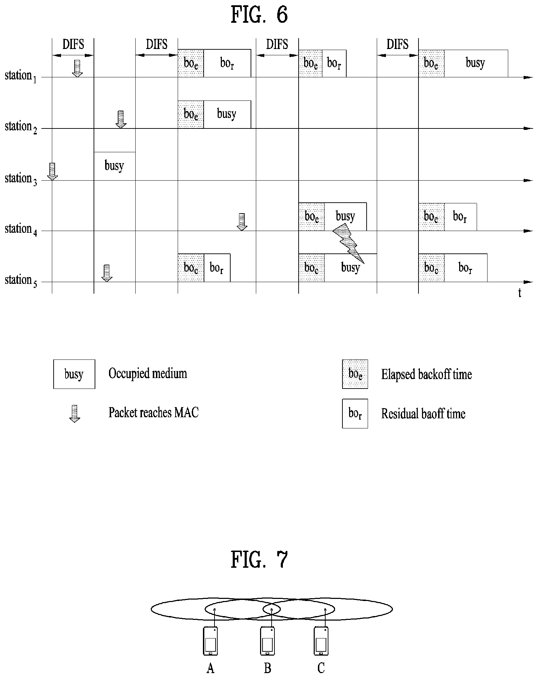

FIG. 6 is a view illustrating a DCF mechanism in a WLAN system.

A DCF performs Clear Channel Assessment (CCA) that senses a medium during a specific period (e.g., DIFS: DCF inter-frame space) before data is transmitted by STAs including data to be transmitted. In this case, if a medium is idle (available), an STA can transmit a signal using the medium. However, if a medium is busy (unavailable), an STA can transmit data after waiting for a period as much as a random backoff period in addition to a DIFS under an assumption that many STAs are waiting for the use of the medium. In this case, the random backoff period plays a role in avoiding a collision. If it is assumed that there are many STAs to transmit data, each of the STAs has a statistically different backoff interval value. Consequently, each of the STAs has different transmission timing. If an STA starts to transmit data using the medium, other STAs are unable to use the medium.

A random backoff time and a procedure are briefly explained in the following.

If a state of a specific medium is switched to idle from busy, a plurality of STAs start to prepare for data transmission. In this case, in order to minimize collision, each of a plurality of the STAs intending to transmit data selects a random backoff count and waits for slot time as much as the random backoff count. The random backoff count is a pseudo-random integer value and the value is selected from among values uniformly distributed in a range of [0 CW]. In this case, the CW stands for 'contention window'.

A CW parameter selects a CWmin value as an initial value. If transmission fails, the CWmin value becomes twice the initial value. For example, if it fails to receive an ACK response in response to a transmitted data frame, it may consider it as a collision. If a CW value has a CWmax value, the CWmax value is maintained until data transmission is succeeded. The CW value is reset to the CWmin value when the data transmission is succeeded. In this case, in order to conveniently implement and operate the CW, the CWmin, and the CWmax, it is preferable to configure the CW, the CWmin, and the CWmax to be maintained by 2n-1.

Meanwhile, if a random backoff procedure starts, an STA selects a random backoff count from among a range of [0 CW] and continuously monitors a medium while a backoff slot is countdown. If the medium is switched to a busy state, the STA temporarily stops countdown. If the medium is switched back to the idle, the STA resumes countdown of the backoff slot.

Referring to FIG. 6, many STAs intend to transmit data. In case of an STA 3, since a medium was idle as much as a DIFS, the STA 3 immediately transmits a data frame and the rest of STAs wait until the medium becomes idle. Since the medium was busy for a while, a plurality of STAs are waiting for a chance of using the medium. Hence, each of a plurality of the STAs selects a random backoff count. In this case, FIG. 6 shows a case that an STA 2, which has selected a smallest backoff count, transmits a data frame.

After the transmission of the STA 2 is finished, the medium becomes idle again and the STAs resume countdown for the temporarily stopped backoff interval. Referring to FIG. 6, although an STA 5, which has a next smallest random backoff count value and temporarily stopped countdown when the medium is busy, count downs the remaining backoff slot and transmits a data frame, it is overlapped with a random backoff count value of an STA 4 by chance. It is able to see that a collision occurs. In this case, since both the STA 5 and the STA 4 are unable to receive an ACK response in response to a transmitted data, the STAs select a random backoff count value again after CW is increased as much as twice.

As mentioned in the foregoing description, the most fundamental principle of the CSMA/CA is carrier sensing. A terminal is able to use physical carrier sensing and virtual carrier sensing to determine whether or not a DCF medium is busy/idle. The physical carrier sensing is performed at a PHY (physical layer) and the physical carrier sensing is performed through energy detection or preamble detection. For example, if it is determined as a receiving end has measured a power level or has read a preamble, it can be considered as a medium is busy. The virtual carrier sensing is performed by setting a Network Allocation Vector (NAV) to make other STAs not transmit data. The virtual carrier sensing is performed through a duration field value of a MAC header. Meanwhile, in order to reduce possibility of collision, a robust collision detection mechanism has been introduced. The reason for the introduction of the robust collision detection mechanism can be checked by two examples described in the following. For clarity, assume that a carrier sensing range is identical to a transmission range.

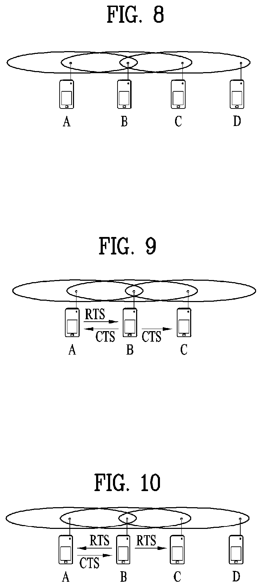

FIGS. 7 and 8 are view illustrating exemplary problems of a conventional collision resolution mechanism.

Specifically, FIG. 7 is a view illustrating hidden node issues. The present example shows a case that an STA A is communicating with an STA B and an STA C has information to be transmitted. Specifically, when the STA A transmits information to the STA B, since the STA C is out of transmission range of the STA A at the time of performing carrier sensing on a medium before transmitting data to the STA B, the STA C is unable to detect a signal transmitted by the STA A and there is a possibility that the medium is considered as being in an idle state. As a result, since the STA B receives information of the STA A and information of the STA C at the same time, a collision occurs. In this case, the STA A can be regarded as a hidden node of the STA C.

Meanwhile, FIG. 8 is a view illustrating exposed node issues. Currently, the STA B transmits data to the STA A. In this case, when the STA C performs carrier sensing, since the STA B is in a state of transmitting information, the carrier sensing shows a result that a medium is busy. As a result, although the STA C wants to transmit data to an STA D, since the media is sensed as busy, the STA C may unnecessarily wait until the medium becomes idle. In particular, although the STA A is located at the outside of a CS range of the STA C, the STA A may block information transmission of the STA C. In this case, the STA C becomes an exposed node of the STA B.

In order to make good use of a collision avoidance mechanism in the aforementioned situation, it may be able to introduce such a short signaling packet as RTS (request to send), CTS (clear to send), and the like. In particular, it may be able to use the short signaling packet to enable surrounding STAs to overhear whether or not two STAs transmit information. In particular, if an STA intending to transmit data transmits an RTS frame to an STA receiving the data, the receiving end STA can inform surrounding terminals that the receiving end STA is going to receive data by transmitting a CTS frame to the surrounding terminals.

FIG. 9 is a diagram for explaining a mechanism of solving a hidden node issue using an RTS/CTS frame.

Referring to FIG. 9, both the STA A and the STA C intend to transmit data to the STA B. If the STA A sends RTS to the STA B, the STA B sends CTS to both the STA A and the STA C located near the STA B. As a result, the STA C waits until data transmission between the STA A and the STA B is finished. By doing so, it is able to avoid a collision.

FIG. 10 is a view illustrating a mechanism of solving an exposed node issue using an RTS/CTS frame.

Referring to FIG. 10, the STA C overhears RTS/CTS transmission between the STA A and the STA B. By doing so, although the STA C transmits data to a different STA D, the STA C is able to know that a collision does not occur. In particular, the STA B transmits RTS to all terminals located near the STA B and transmits CTS to the STA A only to which data is to be practically transmitted. Since the STA C receives the RTS and does not receive the CTS of the STA A, the STA C is able to know that the STA A is located at the outside of a CS range of the STA C.

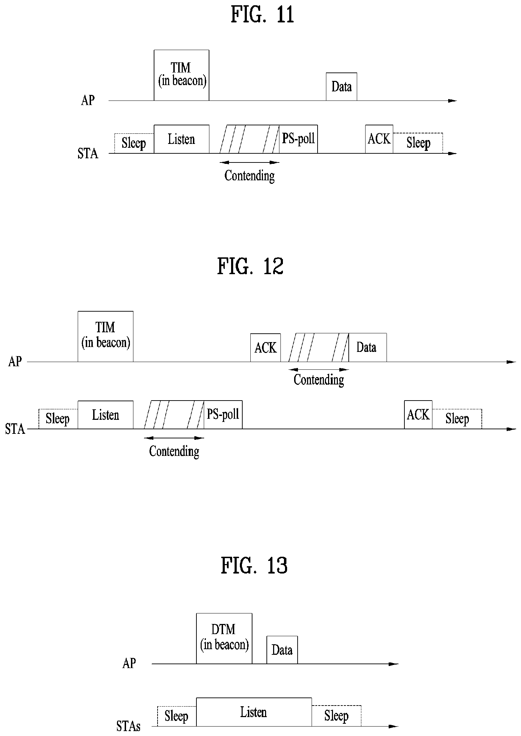

FIGS. 11 to 13 are views illustrating an operation of an STA which has received TIM.

Referring to FIG. 11, an STA switches to an awake state from a sleep state to receive a beacon frame including a TIM from an AP and interprets the received TIM element. By doing so, the STA is able to know there is a buffered traffic to be transmitted to the STA. The STA performs contending with other STAs to access a medium for transmitting a PS-poll frame and may be then able to transmit the PS-poll frame to request data frame transmission to the AP. Having received the PS-poll frame transmitted by the STA, the AP can transmit a frame to the STA. The STA receives a data frame and may be able to transmit a confirmation response (ACK) to the AP in response to the data frame. Subsequently, the STA can switch back to the sleep state.

As shown in FIG. 11, having received the PS-poll frame from the STA, the AP may operate according to an immediate response scheme that a data frame is transmitted after prescribed time (e.g., SIFS (short-inter-frame space)). Meanwhile, after the AP receives the PS-poll frame, if the AP fails to prepare a data frame to be transmitted to the STA during SIFS time, the AP may operate according to a deferred response scheme. Regarding this, it is explained in the following with reference to FIG. 12.

In the example shown in FIG. 12, similar to the example of FIG. 11, the STA switches to the awake state from the sleep state, receives a TIM from the AP, performs contending with other STAs, and transmits the PS-poll frame to the AP. If the AP fails to prepare a data frame during an SIFS after the PS-poll frame is received, the AP can transmit an ACK frame instead of the data frame to the STA. If the data frame is ready after the ACK frame is transmitted, the AP can transmit the data frame to the STA after contending is performed. The STA transmits an ACK frame to the AP to indicate that the data frame is successfully received and can switch back to the sleep state.

FIG. 13 illustrates an example in which the AP transmits a DTIM. Stations can switch to the awake state from the sleep state to receive a beacon frame including a DTIM element from the AP. Having received the DTIM, the STAs are able to know that a multicast/broadcast frame is to be transmitted. After the beacon frame including the DTIM is transmitted, the AP can immediately transmit data (i.e., the multicast/broadcast frame) without an operation of transmitting and receiving a PS-poll frame. Having received the beacon frame including the DTIM, the STAs receive data while continuously maintaining the awake state and may be able to switch back to the sleep state after the data reception is completed.

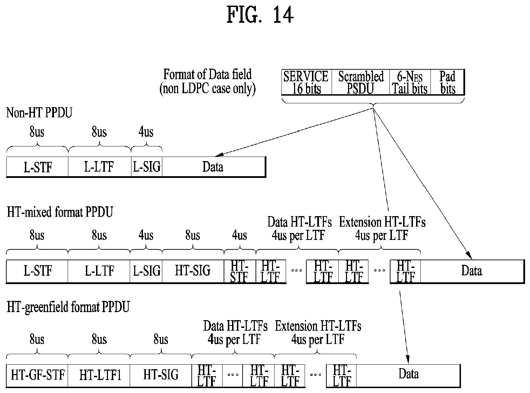

FIGS. 14 to 18 are views illustrating exemplary frame structures used in an IEEE 802.11 system.

An STA can receive a Physical Layer Convergence Protocol (PLCP) Packet Data Unit (PPDU). In this case, a PPDU frame format can be configured in a manner of including a Short Training Field (STF), a Long Training Field (LTF), a SIGnal (SIG) field, and a data field. In this case, as an example, the PPDU frame format can be configured based on a type of the PPDU frame format.

As an example, a non-High Throughput (non-HT) PPDU frame format can be configured by a Legacy-STF (L-STF) field, a Legacy-LTF (L-LTF) field, an SIG field, and a data field only.

And, the type of the PPDU frame format can be configured by either a HT-mixed format PPDU or a HT-greenfield format PPDU. In this case, the aforementioned PPDU format can further include an additional (a different type of) STF, LTF, and an SIG field between the SIG field and the data field.

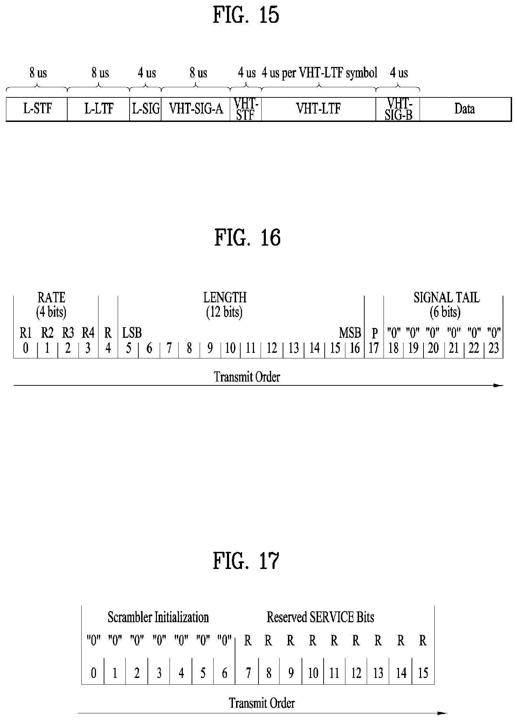

Referring to FIG. 15, it may be able to configure a Very High Throughput (VHT) PPDU format. In this case, the VHT PPDU format can also further include an additional (a different type of) STF, LTF, and an SIG field between the SIG field and the data field. More specifically, the VHT PPDU format can include at least one of a VHT-SIG-A field, a VHT-STF field, a VHT-LTF field, and a VHT-SIG-B field between the L-SIG field and the data field.

In this case, the STF may correspond to a signal for signal detection, Automatic Gain Control (AGC), diversity selection, minute time synchronization, and the like. And, the LTF may correspond to a signal for channel estimation, frequency error estimation, and the like. In this case, both the STF and the LTF can be referred to as a PCLP preamble. The PCLP preamble may correspond to a signal for OFDM physical layer synchronization and channel estimation.

Referring to FIG. 16, the SIG field can include a RATE field, a LENGTH field, and the like. The RATE field can include information on modulation and a coding rate of a data. The LENGTH field can include information on a data length. In addition, the SIG field can include a parity bit, an SIG TAIL bit, and the like.

The data field can include a SERVIVE field, a PSDU (PLCP service data unit), a PPDU TAIL bit. If necessary, the data field can further include a padding bit.

In this case, referring to FIG. 17, a partial bit of the SERVICE field can be used for synchronization of a descrambler in a receiving end and a partial bit can be configured by a reserved bit. The PSDU corresponds to a MAC Protocol Data Unit (PDU) defined in a MAC layer and can include data generated/used in a higher layer. The PPDU TAIL bit can be used for returning an encoder to a zero state. The padding bit can be used for matching a length of a data field with a prescribed unit.

And, as mentioned in the foregoing description, the VHT PPDU format can include an additional (or a different type of) STF, LTF, and an SIG field. In this case, L-STF, L-LTF, and L-SIG may correspond to a part of non-VHT in the VHT PPDU. In this case, VHT-SIG A, VHT-STF, VHT-LTF, and VHT-SIG may correspond to a part of VHT in the VHT PPDU. In particular, a field for the non-VHT and a region for the VHT field can be respectively defined in the VHT PPDU. In this case, as an example, the VHT-SIG A can include information for interpreting the VHT PPDU.

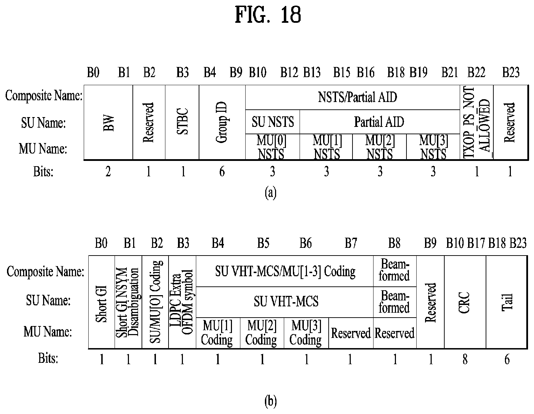

In this case, as an example, referring to FIG. 18, the VHT-SIG A can be configured by VHT SIG-A1 (FIG. 18 (a)) and VHT SIG-A2 (FIG. 18 (b)). In this case, each of the VHT SIG-A1 and the VHT SIG-A2 can be configured by 24 data bits and the VHT SIG-A1 can be transmitted prior to the VHT SIG-A2. In this case, the VHT SIG-A1 can include a BW field, an STBC field, a group ID field, an NSTS/partial AID field, a TXOP_PS_NOT_ALLOWED field, and a reserved field. And, the VHT SIG-A2 can include a short GI field, a short GI NSYM disambiguation field, an SU/MU[0] coding field, an LDPC extra OFDM symbol field, an SU VHT-MCS/MU[1-3] coding field, a beamformed field, a CRC field, a tail field, and a reserved field. Through the aforementioned fields, it may be able to check information on the VHT PPDU.

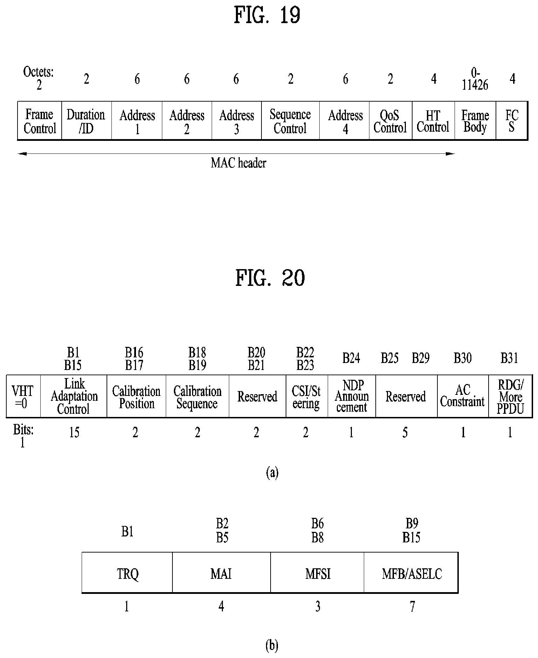

FIGS. 19, 20, and 21 are views illustrating a MAC frame format.

An STA may receive a PPDU in one of the above-described PPDU formats. A PSDU in a data part of the PPDU frame format may include a MAC PDU. The MAC PDU may be defined in various MAC frame formats, and a basic MAC frame may include a MAC header, Frame Body, and Frame Check Sequence (FCS).

For example, referring to FIG. 19, the MAC header may include Frame Control, Duration/ID, Addresses, Sequence Control, QoS Control, and HT Control. In the MAC header, the Frame Control field may include control information required for frame transmission/reception. The Duration/ID field may be set to a time required to transmit the frame. The Address fields may include identification information about a transmitter and a receiver, which will be described later. For the Sequence Control, QoS Control, and HT Control fields, refer to the IEEE 802.11 standard specifications.

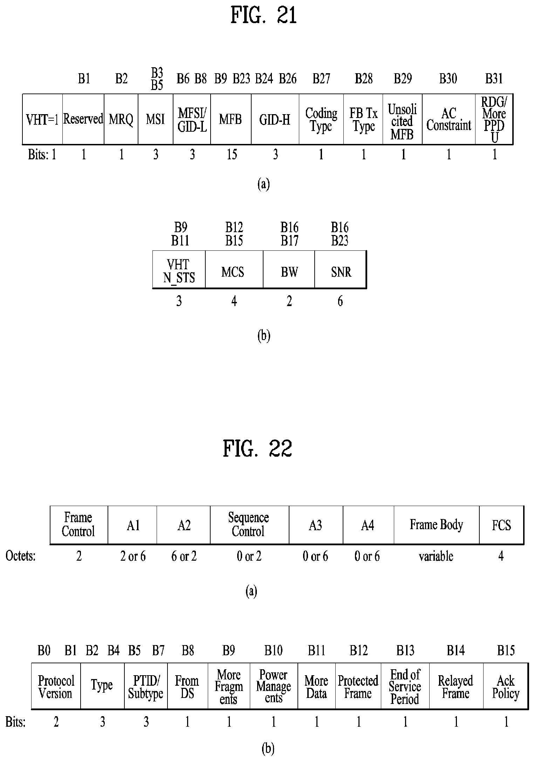

For example, the HT Control field may be configured in two types, HT variant and VHT variant, and include different information according to the types. Referring to FIGS. 20 and 21, a VHT subfield of the HT Control field may indicate whether the HT Control field is the HT-variant type or the VHT-variant type. For example, if the VHT subfield is set to '0', the HT Control field may be the HT-variant type, and if the VHT subfield is set to '1', the HT Control field may be the VHT-variant type.

For example, referring to FIG. 20, if the HT Control field is the HT-variant type, the HT Control field may include Link Adaptation Control, Calibration Position, Calibration Sequence, CSI/Steering, HT NDP Announcement, AC constraint, RDG/More PPDU, and Reserved fields. For example, referring to (b) of FIG. 20, the Link Adaptation Control field may include TRQ, MAI, MFSI, and MFB/ASELC. For more details, refer to the IEEE 802.11 standard specifications.

For example, referring to FIG. 21, if the HT Control field is the VHT-variant type, the HT Control field may include MRQ, MSI, MFSI/GID-LM, MFB GID-H, Coding Type, FB Tx Type, Unsolicited MFB, AC constraint, RDG/More PPDU, and Reserved fields. For example, referring to (b) of FIG. 21, the MFB field may include VHT N_STS, MCS, BW, and SNR. For more details, refer to [Table 1] and the IEEE 802.11 standard specifications.

**[Table 1]**

| **Subfield** | **Meaning** | **Definition** |
|---|---|---|
| MRQ. | MCS request | Set to 1 to request MCS feedback (solicited MFB), otherwise setto 0. |
| MSI | MRQ sequence identifier | When the MRQ subfield is set to 1, the MSI subfield contains a sequence number in the range 0 to 6 that identifies the specific request. When the MRQ subfield is set to 0, the MSI subfield is reserved. |
| MFSI/GID-L | MFB sequence identifier/LSB of Group ID | If the Unsolicited MFB subfield is set to 0, the MFSI/GID-Lsubfield contains the received value of MSI contained in the frame to which the MFB information refers. If the Unsolicited MFB subfield is set to 1, the MFSI/GID-Lsubfield contains the lowest 3 bits of Group ID of the PPDU to which the unsolicited MFB refers. |
| MFB. | VHT N_STS, MCS, BW and SNR feedback | MFB subfield is interpreted as defined in Table 8-ac2 (MFB subfield in the VHT format HT Control field). This subfield contains the recommended MFB. The value of MCS=15 and VHT N_STS=7 indicates that no feedback is present. |
| GID-H | MSB of Group ID . | If the Unsolicited MFB subfield is set to 1, the GID-H subfield contains the highest 3 bits of Group ID of the PPDU to which the unsolicited MFB refers. Otherwise this subfield is reserved.. |

| Subfield | Meaning | Definition. |
|---|---|---|
| Coding Type | Coding type of MFB response. | If the Unsolicited MFB subfield is set to 1, the Coding Type subfield contains the Coding Information (set to 0 for BCC and set to 1 for LDPC) to which the unsolicited MFB refers. Otherwise this subfield is reserved. |
| FB Tx Type. | Transmission type of MFB response | If the UnsolicitedMFB subfield is set to 1 and |
| | | FB Tx Type subfield is set to 0, the unsolicited MFB refers to either an unbeamformed VHT PPDU or transmit diversity using an STBC VHT PPDU. |
| | | If the Unsolicited MFB subfield is set to 1 and the FB Tx Type subfield is set to 1, the unsolicited MFB refers to a beamformed SU-MIMO VHT PPDU. |
| | | Otherwise this subfield is reserved. |
| Unsolicited MFB | Unsolicited MCS feedback indicator | Set to 1 if the MFB is not a response to an MRQ. |
| | | Set to 0 if the MFB is a response to an MRQ. |
| AC Constraint | | As described in AC Constraint field in 8.2.4.6.2 (HTformat). |
| RDG/More PPDU | | As described in RGD/More PPDU field in 8.2.4.6.2 (HT format). |

FIG. 22 is a view illustrating a Short MAC frame format. A MAC frame may be configured as a Short MAC frame by reducing unnecessary information when needed, to prevent waste of radio resources. For example, referring to FIG. 22, the MAC header of a Short MAC frame may always include a Frame Control field, an A1 field, and an A2 field. The MAC header may selectively include a Sequence Control field, an A3 field, and an A4 field. Since information unnecessary for a MAC frame is not included in a Short MAC frame in this manner, radio resources may be conserved.

For example, the Frame Control field of the MAC header may include Protocol Version, Type, PTID/Subtype, From DS, More Fragment, Power Management, More Data, Protected Frame, End of Service Period, Relayed Frame, and Ack Policy. For a description of each subfield of the Frame Control field, refer to the IEEE 802.11 standard specifications.

Meanwhile, the Type field of the Frame Control field in the MAC header may be defined as illustrated in [Table 2]. The Type field may be 3 bits with value 0 to value 3 providing address information and value 4 to value 7 being reserved. New address information may be provided using the reserved values in the present disclosure, which will be described later.

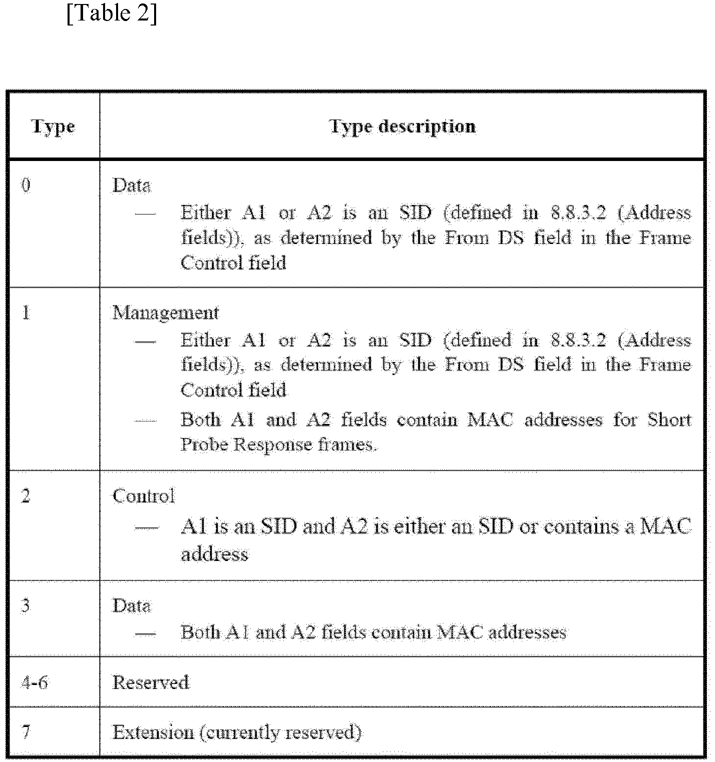

In the Frame Control field of the MAC header, the From DS field may be 1 bit, as defined in [Table 3]. The present disclosure is applicable to the From DS field, which will be described later.

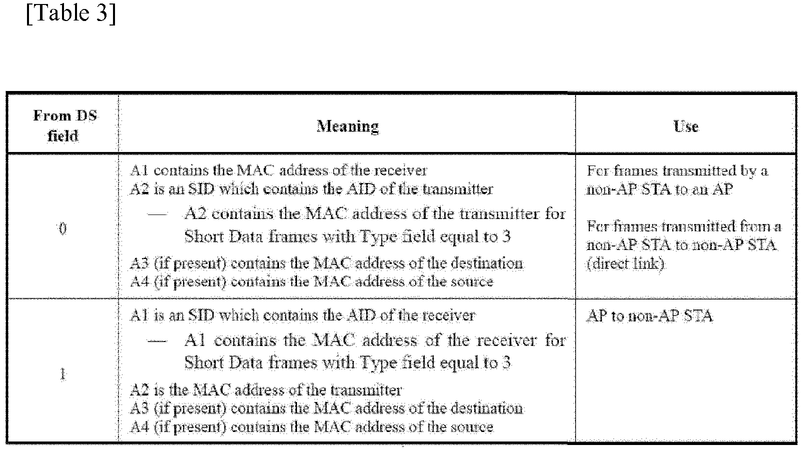

Each of the More Fragment, Power Management, More Data, Protected Frame, End of Service Period, Relayed Frame, and Ack Policy fields may be configured in 1 bit. The Ack Policy field may provide ACKnowledgement/Negative ACKnowledgement (ACK/NACK) information in 1 bit, and each value of the Ack Policy field may be defined as listed in [Table 4]. For more details, refer to the IEEE 802.11 standard specifications.

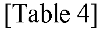

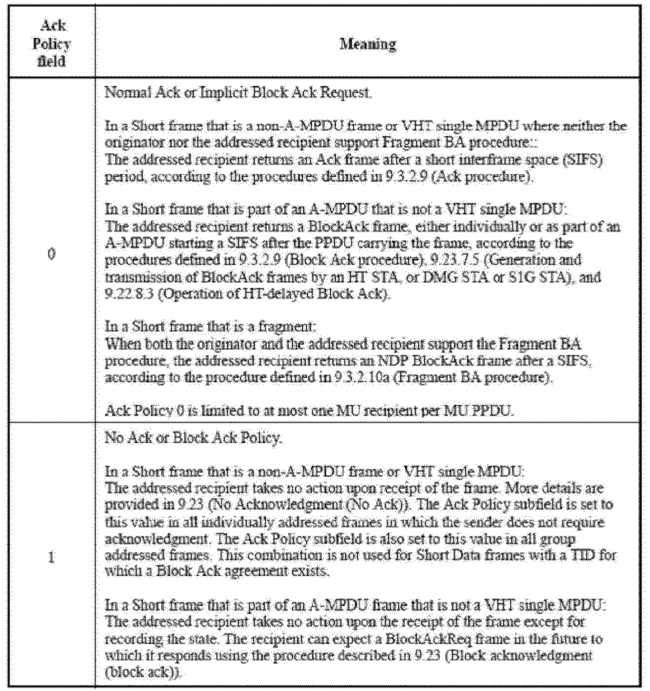

Regarding STAs using a frame constructed in the above-described format, an AP VHT STA may support a non-AP VHT STA operating in a Transmit Opportunity (TXOP) power save mode in a BSS. For example, the non-AP VHT STA may operate in the TXOP power save mode in an awake state. The AP VHT STA may switch the non-AP VHT STA to a doze state during a TXOP. For example, the AP VHT STA may command the non-AP VHT STA to switch to the doze state by transmitting a VHT PPDU with a TXVECTOR parameter, TXOP PS NOT ALLOWED set to 0. Parameters in TXVECTOR transmitted along with the VHT PPDU by the AP VHT STA may be changed from 1 to 0 and maintained during the TXOP. Therefore, power may be saved during the remaining TXOP.

On the contrary, if TXOP_PS NOT ALLOWED is set to 1 and thus power saving is not performed, the parameters in TXVECTOR may be kept unchanged.

For example, as described before, the non-AP VHT STA may switch to the doze state in the TXOP power save mode during a TXOP, if the following conditions are satisfied.

- A VHT MU PPDU is received, and the STA is not indicated as a group member by an RXVECTOR parameter, Group_ID.

- An SU PPDU is received, and an RXVECTOR parameter, PARTIAL_AID is not 0 or does not match the partial AID of the STA.

- Although the STA determines that the RXVECTOR parameter, PARTIAL_AID matches the partial AID of the STA, a receiver address of the MAC header does not match the MAC address of the STA.

- Although the RXVECTOR parameter, Group_ID indicates that the STA is a group member, an RXVECTOR parameter, NUM_STS is set to 0.

- A VHT NDP Announcement frame is received, and the RXVECTOR parameter, PARTIAL AID is set to 0 and does not match the AID of an Info field for the STA.

- The STA receives a frame with More Data set to 0 and Ack Policy set to No Ack, or transmits an ACK with Ack Policy set to a value other than No Ack.

The AP VHT STA may include a Duration/ID value set to the remaining TXOP interval and a NAV-SET Sequence (e.g., Ready To Send/Clear To Send (RTS/CTS)). Herein, the AP VHT STA may not transmit a frame to the non-AP VHT STA switching to the doze state based on the above-described conditions during the remaining TXOP.

For example, if the AP VHT STA transmits a VHT PPDU with the TXVECTOR parameter, TXOP_PS NOT_ALLOWED set to 0 in the same TXOP and does not want the STA to switch from the awake state to the doze state, the AP VHT STA may not transmit a VHT SU PPDU.

For example, the AP VHT STA may not transmit a frame to a VHT STA that has switched to the doze state before timeout of a NAV set at the start of a TXOP.

If the AP VHT STA fails to receive an ACK after transmitting a frame including at least one of a MAC Service Data Unit (MSDU), an Aggregated-MSDU (A-MSDU), and a MAC Management Protocol Data Unit (MMPDU), with More Data set to 0, the AP VHT STA may retransmit the frame at least once in the same TXOP. For example, if the AP VHT STA fails to receive an ACK for a retransmission in the last frame of the same TXOP, the AP VHT STA may retransmit the frame after waiting until the next TXOP.

For example, the AP VHT STA may receive a Block Ack frame from a VHT STA operating in the TXOP power save mode. The Block Ack frame may be a response to an A-MPDU including an MPDU with More Data set to 0. Herein, the AP VHT STA is in the doze state and may not receive a response to the sub-sequence of a retransmitted MPDU during the same TXOP.

Further, a VHT STA that has operated in the TXOP power save mode and switched to the doze state may activate a NAV timer while it stays in the doze state. For example, upon expiration of the timer, the VHT STA may transition to the awake state.

Further, the STA may contend for medium access, upon expiration of the NAV timer.

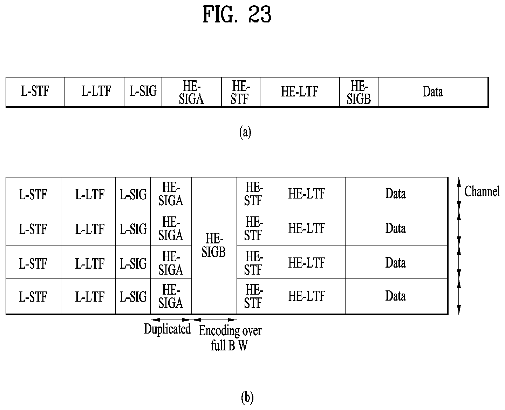

FIG. 23 is a view illustrating exemplary PPDU formats. As described before, various PPDU formats are available. For example, a new PPDU format may be provided. A PPDU may include L-STF, L-LTF, L-SIG, and DATA fields. For example, the PPDU frame may further include HE-SIG A, HE-STF, HE-LTF, and HE-SIG B fields. The HE-SIG A field may include, for example, common information. For example, the common information may include Bandwidth, Guard Interval (GI), Length, BSS Color, and so on. For example, an L part (L-STF, L-LTF, and L-SIG) may be transmitted in a Single Frequency Network (SFN) mode on a 20-MHz basis in the frequency domain. For example, like the L part, the HE-SIG A field may be transmitted in the SFN mode on a 20-MHz basis. For example, if a channel has a bandwidth larger than 20MHz, the L part and the HE-SIG A field may be duplicated on a 20-MHz basis and then transmitted. The HE SIG-B field may provide user-specific information. For example, the user-specific information may include an STA AID, resource allocation information (e.g., an allocation size), an MCS, Nₛₜₛ, coding, STBC, TXBF, and so on. Further, the HE SIG-B field may be transmitted across a total bandwidth.

For example, referring to (b) of FIG. 23, a PPDU may be transmitted in an 80-MHz band. The L part and the HE-SIG A field may be duplicated on a 20-MHz basis and then transmitted, and the HE-SIG B field may be transmitted across the total 80-MHz band. However, the transmission scheme may be purely exemplary, not limited to the above embodiment.

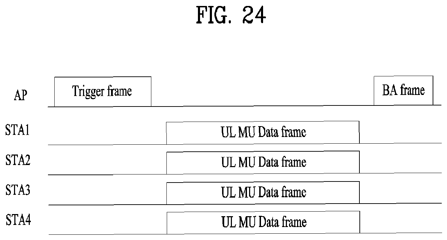

FIG. 24 is a diagram illustrating a method for performing uplink multiuser (UL MU) transmission in an AP STA and a non-AP STA.

As described above, the AP may acquire a TXOP to access a medium, transmit a signal by occupying the medium through contention. Referring to FIG. 24, the AP STA may transmit a trigger frame to a plurality of STAs to perform UL MU transmission. In this case, the trigger frame may include, for example, information on a resource allocation location and size, IDs of the STAs, MCS, and MU type (= MIMO, OFDMA) as UL MU allocation information. That is, the trigger frame transmitted by the AP STA to a plurality of STAs may be a frame allowing the plurality of STAs to perform UL data transmission. For example, the plurality of STAs may transmit data to the AP after SIFS elapses based on the format indicated by the trigger frame. The AP may then send ACK/NACK information to the STAs, thereby performing UL MU transmission.

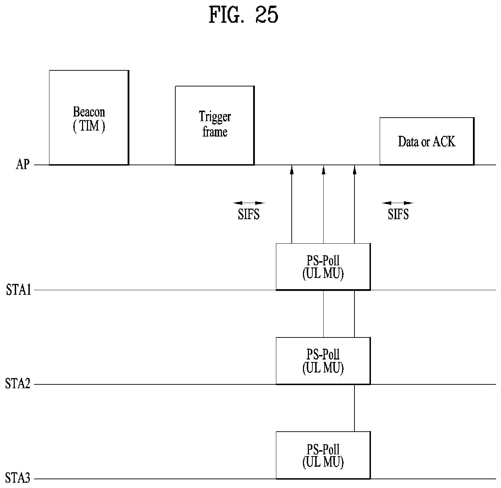

FIG. 25 is a diagram illustrating a method of transmitting a PS-Poll based on UL MU. As described above, an STA may switch from the sleep mode to the awake mode to receive a beacon frame including a Traffic Indication Map (TIM) from the AP STA, and analyze the received TIM element. Thereby, the STA may recognize that there is buffered traffic to be transmitted thereto. At this time, the AP STA may transmit resource information for UL MU data transmission to a plurality of STAs through the trigger frame in order to transmit UL MU data. For example, a plurality of STAs may transmit UL MU PS-Poll frames to the AP STA through a region assigned thereto based on UL MU. Upon receiving the PS-Poll frames transmitted by the plurality of STAs, the AP STA may transmit a data frame. If the AP STA fails to prepare the data frame during the SIFS, it may transmit an ACK frame to the plurality of STAs. That is, each of the plurality of STAs may receive the trigger frame from the AP STA and transmit a PS-Poll frame to the AP STA based on UL MU. In this case, for example, the trigger frame transmitted by the AP STA may be a polling frame or a downlink (DL) data frame. That is, the frame transmitted to a plurality of STAs by the AP STA may be a frame for awakening the plurality of STAs from the Power Saving (PS) mode and transmitting data to the plurality of STAs. In this case, for example, the PS-Poll frame transmitted to the AP STA as a frame indicating that the plurality of STAs is in the awake mode may be an NDP frame. Here, the NDP frame may refer to a frame format in which no data packet is included. That is, the NDP frame may refer to a frame format that includes only the PLCP header part (i.e., the STF, LTF, and SIG fields) of a typical PPDU format and does not include the other part (i.e., the data field). At this time, the plurality of STAs does not transmit data through the PS-Poll frame transmitted to the AP STA based on UL MU, and therefore, the data field may not be included. Thereby, waste of radio resources may be prevented and the efficiency of resource use may be enhanced.

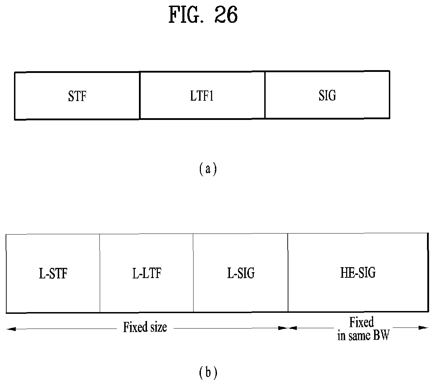

FIG. 26 is a diagram illustrating a structure of an NDP frame transmitted by a plurality of STAs. As described above, a plurality of STAs may receive a frame from the AP STA, and then transmit a frame of the NDP type to the AP STA through a region allocated thereto based on UL MU. That is, each of the plurality of STAs may transmit an NDP frame to the AP STA in a region allocated thereto.

In this case, for example, referring to FIG. 26(a), the existing NDP frame may include an STF field, an LTF field, and a SIG field. Here, the SIG field may include an NDP body field, which will be described later. For example, referring to FIG. 26(b), when the plurality of STAs transmits an NDP frame in a resource region allocated thereto based on UL MU, the NDP frame may include an L-STF field, an L-LTF field, an L-SIG field and an HE-SIG field. Here, the L-STF field, the L-LTF field, and the L-SIG field may be a legacy part (hereinafter, L-part). The HE-STF field, the HE-LTF field, and the HE-SIG field may be an HE-part. In this case, for example, the NDP frame may include only the HE-SIG field among the HE-STF field, the HE-LTE field and the HE-SIG field as the HE-part. The Data field may not be included in the NDP frame. That is, the NDP frame may include an L-part and an HE-SIG part (or field). That is, a frame format different from the existing NDP frame may be given in consideration of a situation in which frames are transmitted through resource regions allocated to each of the STAs based on UL MU.

In this case, for example, the HE-SIG part may be 64 FFTs as the L-part (L-STF field, L-LTF field, and L-SIG field). In this case, for example, the L-part of the NDP frame may have a fixed symbol size. In this case, for example, if the size of the resource allocated to each STA for transmission is smaller than or equal to 20 MHz, the L-part may be transmitted in the form of a Single Frequency Network (SFN) over 20 MHz. That is, the L-part may be transmitted through frames simultaneously at a bandwidth of 20 MHz to which the allocated resources belong. In addition, if the size of the resources allocated to each STA for transmission is larger than 20 MHz, the L-part may be duplicated in units of 20 MHz.

In addition, for example, the number of information bits included in the HE-SIG part (or field) of the NDP frame may be constant regardless of the bandwidth. In this case, for example, the HE-SIG part (or field) to be transmitted may have the size allocated through the trigger frame. In this case, for example, the HE-SIG part (or field) may have a symbol size varying depending on the determined bandwidth.

For example, referring to Table 5 below, the information bits included in the HE-SIG part (or field) may be configured with 24 bits (including CRC and tail) or 48 bits (including CRC and tail). In this case, when the BPSK 1/2 coding rate is used, the symbol size of the HE-SIG field having the 24 information bits may correspond to one symbol. The symbol size of the HE-SIG field having the 48 information bits may correspond to 2 symbols. That is, the symbol size of the HE-SIG part (or field) may be changed based on the given number of bits.

In addition, for example, the symbol size of the HE-SIG part (or field) may be changed based on the size of the allocated resources with the number of HE-SIG information bits fixed. In this case, the symbol size of the HE-SIG part (or field) having 24 bits as information bits, for example, may be 1 symbol if the allocated resource is 20 MHz, 2 symbols if the allocated resource is 10 MHz, 4 symbols if the allocated resource 5 MHz, and 8 symbols if the allocated resource is 2.5 MHz. That is, since the number of information bits for the HE-SIG field is fixed regardless of the size of the bandwidth, if the bandwidth which is an allocated resource is reduced, the symbol size may increase.

That is, when a plurality of STAs transmits an NDP frame through the allocated resources based on UL MU, the L-part of the NDP frame is duplicated in units of 20 MHz, and the HE-SIG part (or field) may be configured based on the resource size assigned to each STA. In this case, the symbol size may vary.

### TABLE 5

| Allocated resource size | Number of HE-SIG information bits (24 bits) | Number of HE-SIG information bits (48 bits) |
|---|---|---|
| 2.5 MHz | 8 symbols | 16 symbols |
| 5 MHz | 4 symbols | 8 symbols |
| 10 MHz | 2 symbols | 4 symbols |
| 20 MHz | 1 symbol | 2 symbols |
| > 20 MHz (e.g., 40, 80, 160 MHz) | When a bandwidth larger than 20 MHz is allocated, HE-SIG is duplicated in units of 20 MHz like the L-part, and the number of symbols is equal to 20 MHz. | |

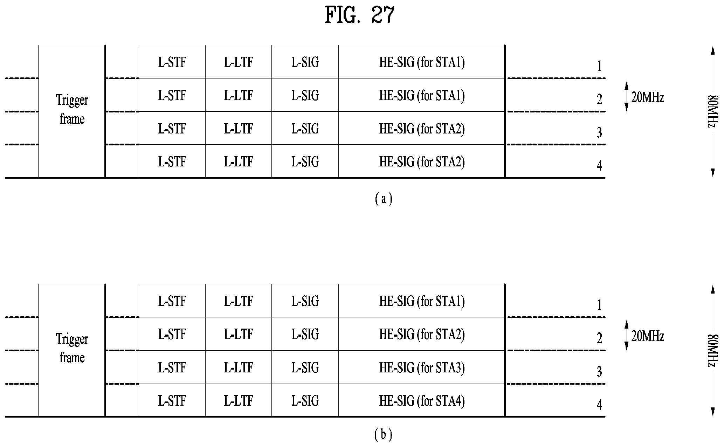

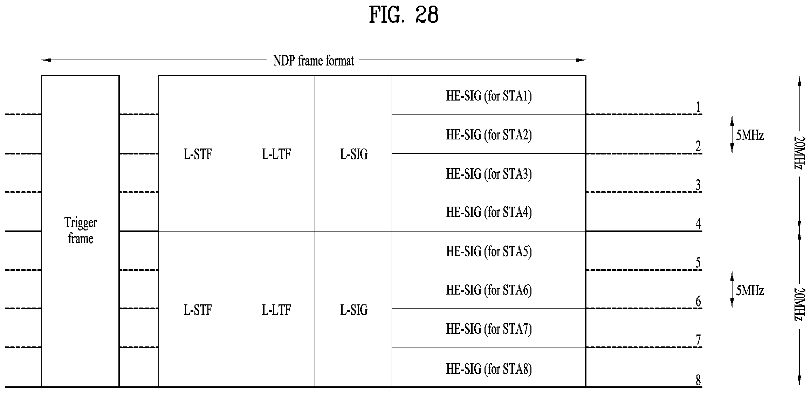

FIGs. 27 and 28 are diagrams illustrating a method for transmitting an NDP frame by a plurality of STAs based on a trigger frame.

As described above, each of the plurality of STAs may receive the trigger frame from the AP STA, and then transmit an NDP frame through the resources allocated thereto.

Referring to FIG. 27(a), the AP STA may transmit, to two STAs, a trigger frame including information for allocating a resource of 40 MHz to each of the STAs. As 40 MHz is larger than 20 MHz, each of the STAs duplicates the L-part and the HE-SIG part (or field) of the NDP frame in units of 20MHz and transmits the same at 40 MHz. That is, each part may be duplicated in units of 20 MHz and transmitted.

Referring to FIG. 27(b), the AP STA may allocate a resource corresponding to 20 MHz to each of four STAs through a trigger frame in the bandwidth of 80 MHz, thereby causing the STAs to transmit NDP frames. In this case, since each of the plurality of STAs is allocated 20 MHz, each of the STAs may transmit the L-part and the HE-SIG part (or field) in units of 20 MHz. In this case, if the total number of information bits included in the HE-SIG part (or field) is 24, the symbol size of the HE-SIG part (or field) may be fixed to 1 symbol at 20 MHz.

In addition, referring to FIG. 28, the AP STA may allocate a resource of 5 MHz to each of 8 STAs in the bandwidth of 40 MHz. In this case, for example, each of the plurality of STAs transmits an HE-SIG part (or field) in a resource region having the size of 5 MHz since the resource of 5 MHz has been allocated to each of the STAs through the trigger frame. In this case, as described above, when the total number of information bits included in the HE-SIG part (or field) is 24, the symbol size of the HE-SIG part (or field) may be fixed to 4 symbols at 5 MHz. In addition, for example, the L-part may be transmitted in the form of SFN at 20 MHz although the resource of 5 MHz has been allocated thereto. At this time, STAs 1 to 4 may simultaneously transmit the L-parts at 20 MHz of a band to which STAs 1 to 4 belong. In addition, STAs 5 to 8 may simultaneously transmit the L-parts at 20 MHz to which STAs 5 to 8 belong. That is, the HE-SIG part (or field) may be configured and transmitted based on the allocated resource, and the L-part may be configured and transmitted based on a certain size regardless of the allocated resource.

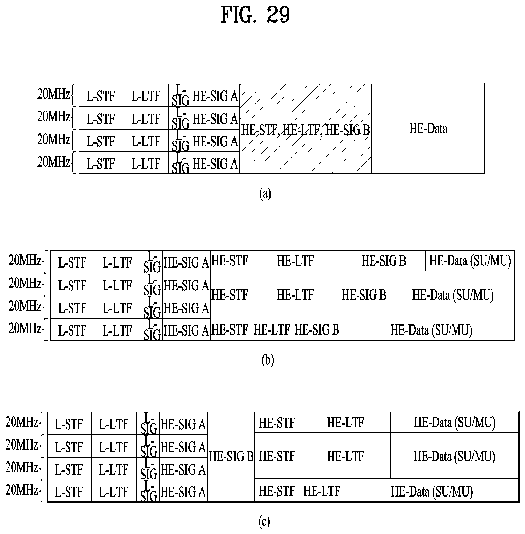

FIG. 29 is a diagram illustrating another example of the PPDU format.

As described above, an STA may transmit a frame of the NDP type to the AP STA. In addition, for example, the STA may transmit a frame containing a data region to the AP STA. In this case, for example, referring to FIG. 29(a), the PPDU may include an HE-DATA part (or field). In this case, for example, the L-part and the HE-SIG A part (or field) may be duplicated in units of 20 MHz and transmitted in the SFN form. For example, the HE-SIG A part (or field) may include common information. For example, the common information may include a bandwidth, GI (Guard Interval), length, and BSS color fields, which may be the same as those of the NDP type frame. The HE-STF, the HE-LTE, the HE-SIG B part (or field) and the HE-DATA part (or field) may not be duplicated in units of 20 MHz, but may be changed differently according to the size of resource allocated to the plurality of STAs, the number of the plurality of STAs, and the like.

For example, referring to FIG. 29(b), the HE-STF, the HE-LTE, the HE-SIG B part (or field) and the HE-DATA part (or field) may be configured and transmitted based on the resources allocated to each of the STAs. For example, in the case of MU-MIMO, the HE-SIG B part (or field) may be distinguished by each STA through SDM (Spatial Division Multiplexing). In addition, for example, the HE-SIG B part (or field) may include information on MCS, Coding, STBC and TXBF as allocation information. That is, for each of a plurality of STAs, the HE-SIG B part (or field) may be configured individually based on the resource allocated to each of the plurality of STAs. In addition, based on the HE-SIG B part (or field) information, the HE-DATA part (or field) may also be individually configured based on the resources allocated to the plurality of STAs in the same manner as the HE-SIG B part and is not limited to the above-described embodiment.

In another example, referring to FIG. 29(c), the HE-SIG B part (or field) may be transmitted after the HE-SIG A part (or field) over the full band. For example, the HE-SIG B part (or field) may include information on AID, resource allocation information, MCS, Nsts, Coding, STBC, and TXBF as allocation information on the STA. For example, the HE-DATA part (or field) may be individually configured based on the resource allocated to each of the plurality of STAs, and is not limited to the above-described embodiment.

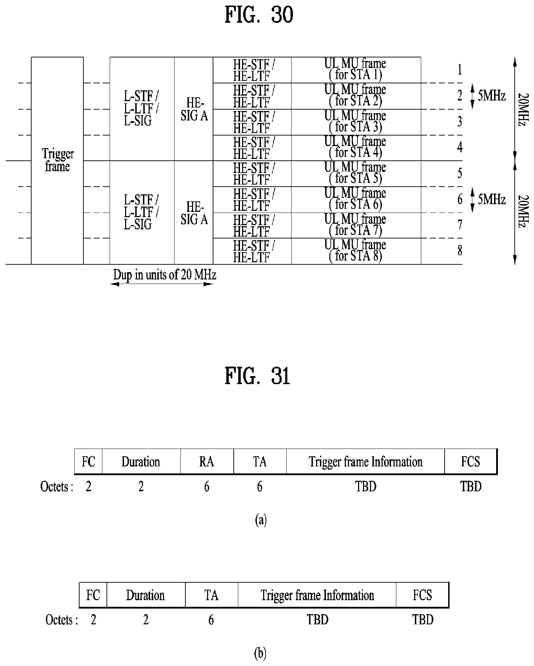

FIG. 30 is a diagram illustrating an NDP frame and a corresponding trigger frame according to an embodiment of the present invention. As described above, the trigger frame may include information necessary for UL-MU transmission for each of a plurality of STAs. In this case, the trigger frame may be, for example, a polling frame or a downlink data frame, and the description given below is based on the trigger frame. As described above, if a frame transmitted according to the trigger frame is an NDP frame, the trigger frame may be configured to include only the allocation information on the NDP frame, thereby minimizing frame overhead.

For example, when the frame used for UL-MU transmission is an NDP frame, the size of resource allocated for each of the plurality of STAs to transmit the NDP frame may be constant. For example, when a constant resource size is given, it is not necessary to include resource allocation information for each of the STAs. That is, if the frame used for UL-MU transmission is an NDP frame, unnecessary information may not be included in the trigger frame, such that overhead is reduced.

In addition, for example, embodiments of the present invention may not be limited to the NDP frame and UL transmission. For example, unnecessary information may be omitted based on a certain resource size in a trigger frame (or a frame in which scheduling is performed), which is used when the size of an allocated resource is constant as in the case of the ACK frame or the PS-Poll frame. Hereinafter, a frame format of the trigger frame will be described based on the trigger frame and the UL transmission. However, as described above, the frame format may be equally applied to a frame having a constant frame size or on DL, and the present invention is not limited to the above embodiment.

FIG. 31 is a diagram illustrating a case where the trigger frame is a MAC control frame. The trigger frame may be transmitted in the form of a MAC control frame or an NDP trigger frame. For example, when the trigger frame is a MAC control frame, the MAC control frame may include at least one of a Frame Control field, a Receiver Address field, a Transmitter Address field, a trigger frame information field, and an FCS field. Here, the Frame Control field, the Receiver Address field, and the Transmitter Address field may be, for example, the L-part described above. In addition, when the trigger frame is transmitted based on UL-MU transmission, for example, the Receiver Address field may be configured as a broadcast address, and the Transmitter Address field may be a BSSID of the address of the AP. For example, referring to FIG. 31(b), the trigger frame is transmitted to a plurality of STAs, and thus it may not include the Receiver Address field.

The MAC control frame may be transmitted, for example, in a format including an L-part and an HE-part or in a PHY header format used in IEEE802.11a/b/g/n/ac. That is, the MAC control frame format may be changed to different forms and is not limited to the above-described embodiment.

In addition, for example, when the trigger frame is transmitted in the form of an NDP trigger frame, the trigger frame information field may be included in the HE-SIG part. For example, if a frame transmitted to the AP STA by an STA according to the trigger frame is a frame of the NDP type, the trigger frame may be configured in the NDP trigger frame format. For example, the trigger frame information field may be included in the HE-SIG B part, but embodiments of the present invention are not limited thereto. That is, the trigger frame for the frame transmitted in the NDP format may not include information on the individual data, and thus may also be configured in the form of an NDP trigger frame. Thereby, unnecessary information may be omitted. Accordingly, resource efficiency may be improved, and overhead may be reduced.

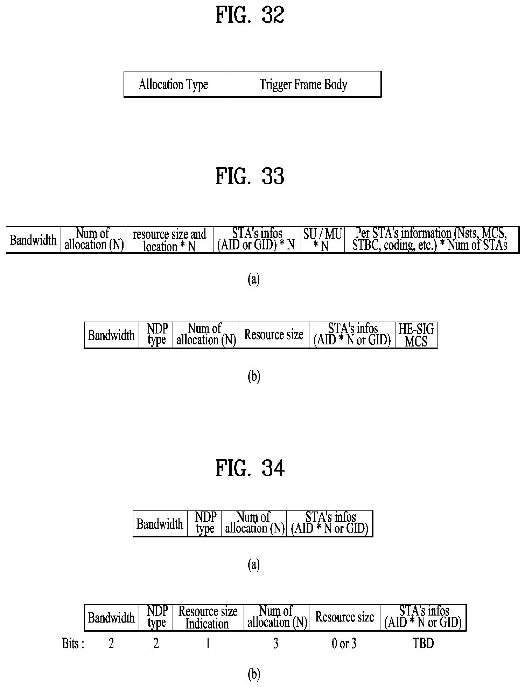

FIG. 32 is a diagram illustrating an example of a trigger frame information field format included in a trigger frame.

The trigger frame information field may include at least one of an Allocation Type part (or field) and a Trigger Frame Body part (or field). In this case, for example, the Allocation Type part may be a part indicating the type of a resource region allocated to a plurality of STAs transmitting a frame to the AP STA by the trigger frame. In this case, for example, when the Allocation Type part is set to a first value, the plurality of STAs may transmit a frame of the NDP type to the AP STA. For example, when the Allocation Type part is set to a second value, the plurality of STAs may transmit a frame including a data region to the AP STA. In addition, the Allocation Type part may be configured with, for example, 1 bit to represent two kinds of information. In addition, for example, the Allocation Type part may include multiple bits of other additional information, and is not limited to the above-described embodiment.

When the Allocation Type part is set to the first value, the Trigger Frame Body part may include allocation information based on the NDP frame. Further, when the Allocation Type part is set to the second value, the Trigger Frame Body part may include allocation information based on a frame including the data region. That is, the Allocation Type part may be a part that indicates whether a plurality of STAs transmits a frame of the NDP type to the AP STA. Through this part, information of the Trigger Frame Body part may be included and transmitted differently.

FIG. 33 is a diagram illustrating the format of a Trigger Frame Body part based on allocation type information. As described above, based on the Allocation Type part, the Trigger Frame Body part may include allocation information which is based on the NDP frame or allocation information which is based on a frame including a data region.

Referring to FIG. 330(a), for example, when the Trigger Frame Body part includes allocation information based on a frame including a data region, the Trigger Frame Body may include at least one of a Bandwidth part, a Number of Allocation part, a Resource Size and Location part, an STA's information part, an SU/MU (Single User/Multiple Users) part and a Per STA's information part.

Here, the Bandwidth part may include information on the bandwidth allocated to all of the plurality of STAs based on UL-MU transmission. In this case, the Bandwidth part is the full bandwidth information, and thus may be configured regardless of the number of STAs.

The Number of Allocation part may indicate the number of allocated resources as a part indicating the number of the STAs. The Number of Allocation part may be configured based on the number of STAs.

The Resource Size and Location part may include the size and location information about the resources allocated to each of the STAs. In this case, for example, the Resource Size and Location part may be configured differently for each STA, and may be configured based on the number of STAs. In addition, the information may be included in the form of an index or a bitmap for the entire resource allocation structure. In this case, one index or bitmap may be included.

The STA's information part may be a part including identification information about the STA, and may be configured based on the number of STAs. For example, when transmitted based on SU-MIMO, the identification information may be AID. In addition, when transmitted based on MU-MIMO, the identification information may be GID.

In addition, the SU/MU part may indicate whether the allocated resource is for SU-MIMO or MU-MIMO. In this case, the SU/MU part may also be configured differently according to each allocated resource, and may be changed based on the number of allocated resources or the number of STAs. FIG. 33(a) shows a format based on SU-MIMO. However, the present invention is not limited thereto and may also be applied to MU-MIMO. In this case, for example, the SU/MU part may be configured differently depending on the number of allocated resources.

In addition, the individual STA information part may include individual information about each of the plurality of STAs. Here, for example, the individual STA information part is configured for each of the STAs and thus may be configured differently based on the number of STAs.

FIG. 33(b) is a diagram illustrating a case where allocation information about an NDP frame is included in a Trigger Frame Body part. That is, a plurality of STAs may transmit a frame of the NDP type to the AP STA after receiving a trigger frame. Since the frame of the NDP type may have a constant resource size, a frame format that is simpler than the format shown in FIG. 33(a) may be included in the Trigger Frame Body part. For example, the Trigger Frame Body may include at least one of a Bandwidth part, an NDP type part, a Number of Allocation part, a Resource Size part, an STA's information part, and an HE-SIG MCS part.

Here, the Bandwidth part is the same as in FIG. 33(a), and may be configured independently of the number of the plurality of STAs.

In addition, the NDP type part may be included only in the NDP frame information, and may be a field indicating the type information about the NDP frame, such as NDP PS-Poll, NDP ACK, NDP Block ACK, and NDP Sounding. In this case, for example, when based on the UL-MU transmission, the plurality of STAs transmits NDP frames having the same NDP frame type, and accordingly the NDP type part may be configured independently of the number of the plurality of STAs.

In addition, the Number of Allocation part serves to indicate the number of the plurality of STAs, and may be configured based on the number of the plurality of STAs.

In addition, the Resource Size part may be a part indicating the size of a resource allocated to each of a plurality of STAs. In this case, for example, a plurality of STAs transmitting an NDP frame performs frame transmission with a certain resource size, and thus only resource allocation size information may be included in contrast with the example of FIG. 33(a). In this case, the plurality of STAs has the same resource allocation size, and accordingly the Resource Allocation Size part may be configured regardless of the number of STAs.

In addition, the STA's information part may be configured differently according to the number of the plurality of STAs as ID information on each STA.

The HE-SIG MCS part may indicate the MCS information of the HE-SIG field of the NDP frame transmitted based on UL-MU. In this case, for example, when the size of the HE-SIG MCS part is 1 bit, 0 may indicate MCS 0 (BPSK 1/2) and 1 may indicate MCS 1 (QPSK 1/2). For example, when the size is 2 bits, 00 may indicate MCS0, 01 may indicate MCS1, 10 may indicate MCS2, and 11 may indicate MCS3. In addition, for example, if the HE-SIG fixedly uses MCS0 (BPSK 1/2), the HE-SIG MCS part may be omitted. In addition, the HE-SIG MCS part may be applied to a plurality of STAs in the same manner, and may be configured regardless of the number of the plurality of STAs.

In addition, for example, since the plurality of STAs transmits frames of the NDP type to the AP STA, the Trigger Frame Body part need not include information on the individual STAs.

That is, when the Trigger Frame Body part includes the allocation information about the NDP frame, the number of information items included in the trigger frame may be reduced, thereby reducing overhead and improving resource efficiency. Therefore, when a plurality of STAs transmits frames in the form of an NDP frame to the AP STA, there is a need for use of a different type of trigger frame format.

FIG. 34 is a diagram illustrating an example of a format in which allocation information about an NDP frame is included in a Trigger Frame Body part. In the case where a plurality of STAs performs transmission of an NDP frame after receiving a trigger frame, the STAs may perform only SU transmission in a region allocated thereto. That is, the region allocated to the NDP frame may not be used for MU-MIMO transmission.

Referring to FIG. 34(a), in the case where the allocation information about the NDP frame is included in the Trigger Frame Body part, if the resource allocation size of the NDP frame is fixed, the Resource Size part may not be included. For example, the resource allocation size may be fixed to one of 1.25 MHz, 2.5 MHz, and 5 MHz. That is, since the resource size required to transmit the NDP frame is fixed, the NDP frame may be transmitted with the set resource size without any other indication. Thus, the Resource Size part may be omitted from the Trigger Frame Body part.

In another example, referring to FIG. 34(b), a Resource size indication part may be further included in the Trigger Frame Body part. In this case, for example, the Resource size indication part may serve to indicate whether the size of the allocated resource is fixed as described above. For example, the Resource size indication part may be configured with 1 bit. In this case, if the Resource size indication part has a first value, the Resource Size part may be included in the trigger frame part. In this case, for example, the Resource size part may be configured with multiple bits. For example, the Resource Size part may be configured with 3 bits. That is, if the resource size indicator has a specific value, the Resource Size part of a certain size may be included in the trigger frame part.

In addition, when the resource size indicator has a second value, the Resource Size part may not be included in the trigger frame part. That is, the resource size part may be configured with 0 bit. In other words, the indication part indicating whether to include the Resource Size part in the trigger frame part may be separately included, but the present invention is not limited to the above-described embodiment.

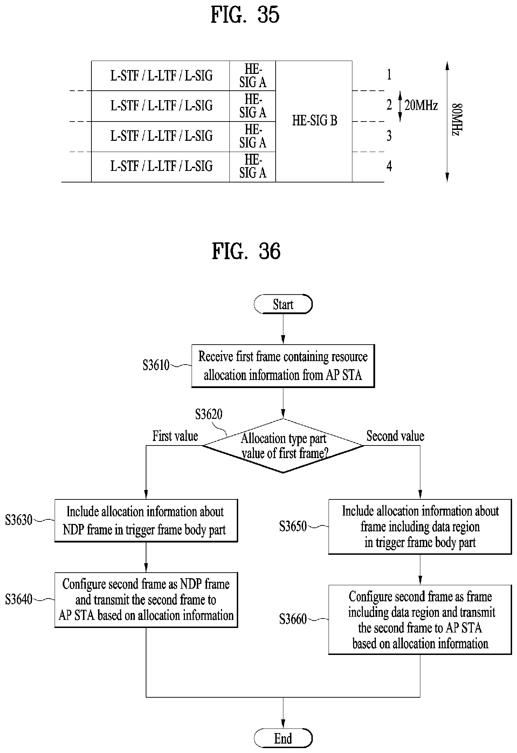

FIG. 35 is a diagram illustrating an NDP trigger frame format. If a plurality of STAs transmits an NDP frame to the AP STA based on UL-MU transmission, the AP STA may transmit a trigger frame in the form of an NDP trigger frame. For example, referring to FIG. 35, when the trigger frame is transmitted in the NDP format using 80 MHz, common information (e.g., BSS Index, Bandwidth, GI length, etc.) may be transmitted through HE-SIGA, and the above-described information may be transmitted through HE-SIG B as information for MU resource allocation.

Table 6 below may be an example of the HE-SIG B format included in the NDP trigger frame. In this case, the respective fields included in Table 6 may be included in HE-SIG B selectively or in a different order, and the present invention is not limited to the above-described embodiment.

Although the portion of the Trigger Frame Body part information on the frame including a data region is omitted from the respective fields included in Table 6, the following fields may be equally applied to the Trigger Frame Body part for the frame including the data region, and the present invention is not limited to the above-described embodiment.

For example, in Table 6 below, the Allocation Type part may implicitly indicate an NDP frame through an allocation size value. For example, when the allocated size is as small as the size of the NDP frame and is set to a value less than a preset value, it may be determined that the allocation is for NDP frame transmission. In addition, for example, some of the information items included in the HE-SIG B (e.g., at least one of NDP Trigger frame indication, allocation type, DL/UL indication, and NDP type) may be included in the HE-SIG A. In addition, each of the fields included in Table 6 may be included in a different order, and the present invention is not limited to the above-described embodiment.

In more detail, in Table 6, the NDP Trigger Frame Indication field may indicate whether the trigger frame is an NDP frame. In this case, for example, the NDP Trigger Frame Indication field may be 1 bit, indicating the type of the trigger frame.

In addition, the Allocation type field may correspond to the Allocation Type part described above, and have the meaning as described above.

In addition, the DL/UL indication field may indicate whether the frame is a DL trigger frame or a UL trigger frame. While the above-described configuration is based on a trigger frame for UL MU transmission, it may also be applied to DL. The DL/UL indication field may serve to indicate DL/UL and may be configured with 1 bit.

In addition, the MU Bandwidth field may correspond to the above-described Bandwidth part, and has the meaning as described above. However, the MU Bandwidth field may be 0 or 3 bits. For example, if the bandwidth of the UL MU transmission is always the same as that of the trigger frame, it may be configured with 0 bit as there is no need for indication of the bandwidth.

In addition, the NDP Type field may correspond to the NDP type part described above, and has the meaning as described above.

The Num of allocation field may correspond to the above-described Number of Allocation part, and has the meaning as described above.

The resource size indication field may correspond to the Resource size indication part, and has the meaning as described above.

The Resource size field may correspond to the Resource Size part, and has the meaning as described above.

The meaning of the HE-SIG MCS field is as described above.

An STA's information field, a CRC field, and a Tail field may be further included, and the present invention is not limited to the above-described embodiment.

### TABLE 6

| Name | Length (bits) | Value | Notes |
|---|---|---|---|
| NDP Trigger Frame indication | 1 | 1: indicates that the trigger frame is an NDP frame | |
| Allocation type | 1 | 0: MU Normal frame allocation | |
| | | 1: MU NDP frame allocation | |
| DL/UL indication | 0 or 1 | 0: DL Trigger frame | This field may not be included if the trigger frame is used only for UL MU transmission in the system |
| | | 1: UL trigger frame | |
| MU Bandwidth | 0 or 3 | The value of the bandwidth of a resource allocated for UL MU transmission | This field may not be included if the bandwidth of UL MU transmission is always the same as that of the trigger frame in the system |
| NDP type | 2 | e.g.) 0: NDP PS Poll | |
| | | 1: NDP ACK | |
| | | 2: NDP BA | |
| | | 3: NDP Sounding | |
| Num of allocation | 3 | Total number of allocations | |

| | | | |
|---|---|---|---|
| Resource size indication | 1 | 1: Resource size is included. | |

| | | | |
|---|---|---|---|
| Resource size | 0 or 3 | | |
| HE-SIG MCS | 1 or 2 | Indicates MCS information of the HE-SIG field of the UL NDP frame. | If the field is fixed to one value (BPSK 1/2 coding rate) in the system, HE-SIG MCS may not be included. |
| | | e.g., when the field is 1 bit, | |
| | | 0: MCS 0 or BPSK 1/2 coding rate | |
| | | 1: MCS 1 or QPSK 1/2 coding rate. | |
| | | When the field is 2 bits, | |
| | | 00: MCS0 | |
| | | 01: MCS1 | |
| | | 10: MCS2 | |
| | | 11: MCS3 | |
| STA's Address | TBD (e.g., Size of an AID*N | | |
| CRC | 4 or 8 bits | | |
| Tail | 6 bits | | |

FIG. 36 is a flowchart illustrating a method of transmitting a signal by an STA. A first frame including resource allocation information may be received from the AP STA (S3610). Here, as shown in FIGs. 29 to 35, the first frame may be one of a trigger frame, a polling frame, and a DL data frame. That is, the first frame may be a frame including resource allocation information for an STA transmitting a frame to the AP STA.

Next, information included in the Trigger Frame Body part may be configured differently based on the value of the Allocation Type part of the first frame (S3620). As described in FIGs. 29 to 35, the Allocation Type part may be configured based on the type of a frame to be transmitted after a plurality of STAs receives the trigger frame. In addition, the information included in the Trigger Frame Body part may be configured differently based on the Allocation Type part, as described above.

Next, when the Allocation Type part value is a first value, allocation information about the NDP frame may be included in the Trigger Frame Body part (S3630). In addition, the second frame transmitted by the STA having received the trigger frame may be configured as a frame of the NDP type, and transmitted to the AP STA based on the allocation information about the NDP frame (S3640). In this case, as described above with reference to FIGs. 29 to 35, the frame of the NDP type may have a constant resource size. Considering this, information included in the Trigger Frame Body part may be configured. For example, the trigger frame body may include at least one of a Bandwidth part, an NDP type part, a Number of Allocation part, a Resource size part, an STA's information part, and a HE-SIG MCS part. In this case, among the parts included in the trigger frame body, the Bandwidth part, the NDP type part, the Resource size part, and the HE-SIG MCS part may be configured regardless of the number of the STAs, and the Number of allocation part and the STA's information part may be configured based on the number of the STAs. That is, since a frame of the NDP type having a constant resource size is transmitted by a plurality of STAs, unnecessary information may be removed or omitted from the trigger frame body, thereby reducing overhead and improving resource efficiency.

Next, if the Allocation Type part has the second value, the Trigger Frame Body part may include allocation information about a frame including a data region (S3650). In addition, the second frame may be configured as a frame including the data region and transmitted to the AP STA based on the allocation information (S3660). In this case, as described above with reference to FIGs. 29 to 35, if the allocation information based on the frame including the data region is included in the Trigger Frame Body part, the Trigger Frame Body part may include at least one of a Number of allocation part, a Resource size and location part, an STA's information part, an SU/MU (Single User/Multiple User) part, and a Per STA's information part. In this case, for example, the Bandwidth part among the parts included in the Trigger Frame Body may be configured regardless of the number of the plurality of STAs, and the Number of allocation part, the Resource size and location part, the STA's information part, the SU/MU part, and the Per STA's information part may be configured based on the number of the plurality of STAs. That is, when a frame including a data region is transmitted to the AP STA, information on each of the plurality of STAs should be individually included in the Trigger Frame Body part, and therefore more information may be included in the Trigger Frame Body part than when a frame of the NDP type is transmitted. Therefore, when a plurality of STAs transmits a frame to an AP STA in the form of an NDP frame, there is a need to use a different trigger frame format.

In the present invention, a trigger frame format has been described for a case where a plurality of STAs transmits an NDP frame to an AP STA, but the present invention is not limited thereto. For example, the NDP frame may be similarly defined and used on downlink. The AP STA may transmit NDP frames to a plurality of STAs on downlink simultaneously. In this case, for example, the NDP frame transmitted on downlink may be used in one of the NDP frame formats as described above, and the same configuration as described above may be equally applied to a trigger frame causing the NDP frames to be simultaneously transmitted to a plurality of STAs on downlink or a frame for scheduling.

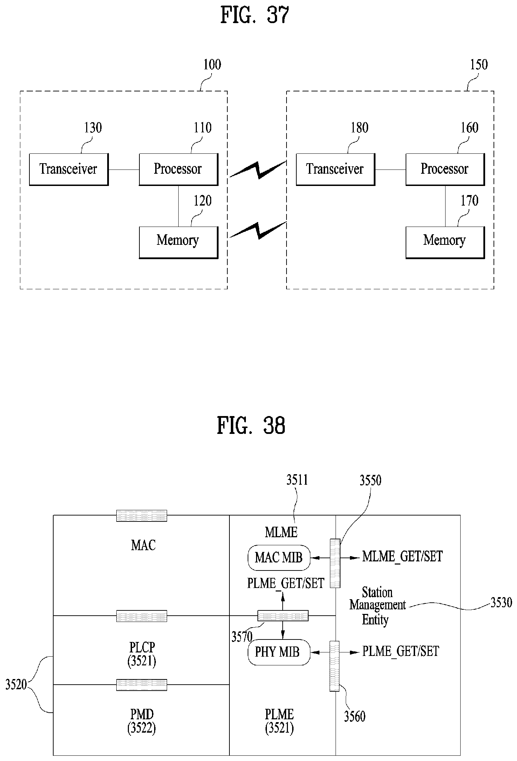

FIG. 37 is a block diagram illustrating an exemplary configuration of an AP (or a BS) and an STA (or a terminal) according to an embodiment of the present invention.

The AP 100 may include a processor 110, a memory 120, and a transceiver 130. The STA 150 may include a processor 160, a memory 170, and a transceiver 180.

The transceivers 130 and 180 may transmit/receive radio signals and may implement a physical layer according to, for example, an IEEE 802 system. The processors 110 and 160 may be connected to the transceivers 130 and 180 to implement a physical layer and/or a MAC layer according to the IEEE 802 system. The processors 110 and 160 may be configured to perform operations in accordance with one or more combinations of the various embodiments of the invention described above. In addition, modules implementing the operations of the AP and the STA according to the various embodiments of the present invention described above may be stored in the memories 120 and 170 and executed by the processors 110 and 160. The memories 120 and 170 may be included in the processors 110 and 160 or may be installed outside the processors 110 and 160 and connected to the processors 110 and 160 by known means.

The above description of the AP 100 and the STA 150 may be applied to a BS and a terminal in other wireless communication systems (e.g., LTE/LTE-A system), respectively.

The specific configuration of the AP and the STA may be implemented such that the above-described embodiments of the present invention are applied independently or two or more of the embodiments are applied at the same time. For the sake of clarity, redundant description will be omitted.

FIG. 38 illustrates an exemplary structure of a processor of an AP or an STA according to an embodiment of the present invention.

The processor of the AP or STA may have a plurality of layers, and FIG. 38 specifically illustrates a MAC sublayer 3810 and a physical layer 3820 on a data link layer (DLL) among these layers. As shown in FIG. 38, the PHY 3820 may include a Physical Layer Convergence Procedure (PLCP) entity 3821 and a Physical Medium Dependent (PMD) entity 3822. The MAC sublayer 3810 and the PHY 3820 both conceptually include a management entity called an MLME (MAC Sublayer Management Entity) 3811. These entities 3811 and 3821 provide a layer management service interface in which the layer management function operates.

In order to provide correct MAC operation, an STA Management Entity (SME) 3830 exists in each STA. The SME 3830 is a layer-independent entity that may be present in a separate management plane or may appear to be off to the side. Although the exact functions of the SME 3830 are not specifically described in this document, the entity 3830 may generally appear to serve to collect layer-dependent states from various Layer Management Entities (LMEs) and set layer-specific parameter values similarly. The SME 3830 may typically perform these functions on behalf of the typical system management entity and implement a standard management protocol.

The entities shown in FIG. 38 interact in various ways. Figure 38 shows some examples of exchanging GET/SET primitives. The XX-GET.request primitive is used to request the value of a given MIB attribute (management information based attribute). The XX-GET.confirm primitive returns an appropriate value of the MIB attribute information if the Status is "Success". Otherwise, it is used to return an error indication in the Status field. The XX-SET.request primitive is used to request that the indicated MIB attribute be set to a given value. If the MIB attribute indicates a specific operation, it is requested that the corresponding operation be performed. The XX-SET.confirm primitive confirms that the indicated MIB attribute is set to a requested value if the status is "Success". Otherwise, it is used to return an error condition to the status field. If the MIB attribute indicates a specific operation, this confirms that the operation has been performed.

As shown in FIG. 38, the MLME 3811 and SME 3830 may exchange various MLME_GET/SET primitives through MLME_SAP 3850. In addition, various PLCM_GET/SET primitives may be exchanged between the PLME 3821 and the SME 3830 via the PLME_SAP 3860 and may be exchanged between the MLME 3811 and the PLME 3870 via the MLME-PLME_SAP 3870.

The embodiments of the present invention described above may be implemented through various means. For example, the embodiments of the present invention may be implemented by hardware, firmware, software, or a combination thereof.

When implemented by hardware, a method according to embodiments of the present invention may be embodied as one or more application specific integrated circuits (ASICs), one or more digital signal processors (DSPs), one or more digital signal processing devices (DSPDs), one or more programmable logic devices (PLDs), one or more field programmable gate arrays (FPGAs), a processor, a controller, a microcontroller, a microprocessor, etc.

When implemented by firmware or software, a method according to embodiments of the present invention may be embodied as a module, a procedure, or a function that performs the functions or operations described above. Software code may be stored in a memory unit and executed by a processor. The memory unit is located at the interior or exterior of the processor and may transmit and receive data to and from the processor via various known means.

Preferred embodiments of the present invention have been described in detail above to allow those skilled in the art to implement and practice the present invention. Although the preferred embodiments of the present invention have been described above, those skilled in the art will appreciate that various modifications and variations can be made in the present invention without departing from the scope of the invention as defined by the appended claims.

## Claims

1. A method for transmitting a frame by a station, STA, (150) operating in a wireless local area network, WLAN, system, the method comprising:
receiving, from an access point, AP (100), a first frame comprising an allocation type part and a trigger frame body part,
wherein the trigger frame body part comprises information on resource allocation for transmitting a second frame; and
transmitting, to the AP (100), the second frame based on the information on the resource allocation,
wherein in case that the allocation type part indicates a null data packet, NDP, frame type:
the second frame is configured as a NDP frame, and
a resource allocation size part is not included in the trigger frame body part when the frequency resource allocation size for the second frame configured as the NDP frame is fixed, and
wherein in case that the allocation type part indicates a frame type including a data region:
the second frame is configured as a frame comprising a data region, and
the resource allocation size part is included in the trigger frame body part.

2. The method of claim 1, wherein the first frame is one of a trigger frame, a polling frame, and a downlink, DL, data frame.

3. The method of claim 1, wherein in case that the allocation type part indicates the NDP frame type: the trigger frame body part further comprises at least one of a bandwidth part, an NDP type part, a number of allocation part, a resource size part, an STA's information part and a high efficiency-signal modulation and coding scheme, HE-SIG MCS part.

4. The method of claim 1, wherein the trigger frame body part further comprise information on whether the resource size part is included in the information on the resource allocation.

5. The method of claim 3, wherein the HE-SIG MCS part is not included in the trigger frame body part in case that MCS for the second frame configured as the NDP frame is fixed and used.

6. The method of claim 1, wherein in case that the allocation type part indicates the NDP frame type: the first frame further comprises legacy information and a high efficiency, HE,-SIG part.

7. The method of claim 6, wherein the allocation type part and the trigger frame body part are included in the HE-SIG part.

8. A station, STA, (150) for transmitting a frame in a wireless local area network, WLAN, system, the STA (150) comprising:
a transceiver module (180) configured to exchange data with an external device, and
a processor (160) coupled with the transceiver module (180) and configured to:
receive, from an access point, AP (100), a first frame comprising an allocation type part and a trigger frame body part,
wherein the trigger frame body part comprises information on resource allocation for transmitting a second frame; and
transmit, to the AP (100), the second frame based on the information on the resource allocation,
wherein in case that the allocation type part indicates a null data packet, NDP, frame type:
the second frame is configured as a NDP frame, and
a resource allocation size part is not included in the trigger frame body part when the frequency resource allocation size for the second frame configured as the NDP frame is fixed, and
wherein in case that the allocation type part indicates a frame type including a data region:
the second frame is configured as a frame comprising a data region, and
the resource allocation size part is included in the trigger frame body part.

9. The STA (150) of claim 8, wherein the first frame is one of a trigger frame, a polling frame, and a downlink, DL, data frame.

10. The STA (150) of claim 8, wherein in case that the allocation type part indicates the NDP frame type: the trigger frame body part further comprises at least one of a bandwidth part, a NDP type part, a number of allocation part, a resource size part, an STA's information part and a high efficiency-signal modulation and coding scheme, HE-SIG MCS part.

## Patentansprüche

1. Verfahren zur Übertragung eines Rahmens durch eine Station, STA, (150), die in einem drahtlosen lokalen Bereichsnetzwerk-, WLAN-, System arbeitet, wobei das Verfahren aufweist:
Empfangen eines ersten Rahmens, der einen Zuweisungstypteil und einen Auslöserrahmenkörperteil aufweist, von einem Zugangspunkt, AP (100),
wobei der Auslöserrahmenkörperteil Informationen über die Ressourcenzuweisung zur Übertragung eines zweiten Rahmens aufweist; und
Übertragen des zweiten Rahmens an den AP (100) basierend auf den Informationen über die Ressourcenzuweisung,
wobei in dem Fall, in dem der Zuweisungstypteil einen Nulldatenpaket-, NDP-, Rahmentyp anzeigt:
der zweite Rahmen als ein NDP-Rahmen konfiguriert wird, und
ein Ressourcenzuweisungsgrößenteil nicht in dem Auslöserrahmenkörperteil enthalten ist, wenn die Frequenzressourcenzuweisungsgröße für den zweiten Rahmen, der als der NDP-Rahmen konfiguriert ist, fest ist, und
wobei in dem Fall, in dem der Zuweisungstypteil einen Rahmentyp anzeigt, der einen Datenbereich umfasst:
der zweite Rahmen als ein Rahmen konfiguriert wird, der einen Datenbereich aufweist, und
der Ressourcenzuweisungsgrößenteil in dem Auslöserrahmenkörperteil enthalten ist.

2. Verfahren nach Anspruch 1, wobei der erste Rahmen ein Auslöserrahmen oder ein Abfragerahmen oder ein Downlink-, DL-, Datenrahmen ist.

3. Verfahren nach Anspruch 1, wobei in dem Fall, in dem der Zuweisungstypteil den NDP-Rahmentyp anzeigt: der Auslöserrahmenkörperteil ferner wenigstens einen der folgenden aufweist: einen Bandbreitenteil, einen NDP-Typteil, einen Zuweisungsnummernteil, einen Ressourcengrößenteil, einen STA-Informationsteil und einen Hocheffizienz-Signalmodulations- und Kodierungsschema-, HE-SIG-MCS-, Teil.

4. Verfahren nach Anspruch 1, wobei der Auslöserrahmenkörperteil ferner Informationen darüber aufweist, ob der Ressourcengrößenteil in den Informationen über die Ressourcenzuweisung enthalten ist.

5. Verfahren nach Anspruch 3, wobei der HE-SIG-MCS-Teil in dem Fall, in dem das MCS für den zweiten Rahmen, der als der NDP-Rahmen konfiguriert ist, fest ist und verwendet wird, nicht in dem Auslöserrahmenkörperteil enthalten ist.

6. Verfahren nach Anspruch 1, wobei in dem Fall, in dem der Zuweisungstypteil den NDP-Rahmentyp anzeigt: der erste Rahmen ferner Altsysteminformationen und einen Hocheffizient-, HE-, SIG-Teil aufweist.

7. Verfahren nach Anspruch 6, wobei der Zuweisungstypteil und der Auslöserrahmenkörperteil in dem HE-SIG-Teil enthalten sind.

8. Station, STA, (150) zur Übertragung eines Rahmens in einem drahtlosen lokalen Bereichsnetzwerk-, WLAN-, System, wobei die STA (150) aufweist:
ein Transceiver-Modul (180), das konfiguriert ist, um Daten mit einer externen Vorrichtung auszutauschen, und
einen Prozessor (160), der mit dem Transceiver-Modul (180) gekoppelt ist und konfiguriert ist, um:
einen ersten Rahmen, der einen Zuweisungstypteil und einen Auslöserrahmenkörperteil aufweist, von einem Zugangspunkt, AP (100), zu empfangen,
wobei der Auslöserrahmenkörperteil Informationen über die Ressourcenzuweisung zur Übertragung eines zweiten Rahmens aufweist; und
den zweiten Rahmen basierend auf den Informationen über die Ressourcenzuweisung an den AP (100) zu übertragen,
wobei in dem Fall, in dem der Zuweisungstypteil einen Nulldatenpaket-, NDP-, Rahmentyp anzeigt:
der zweite Rahmen als ein NDP-Rahmen konfiguriert wird, und
ein Ressourcenzuweisungsgrößenteil nicht in dem Auslöserrahmenkörperteil enthalten ist, wenn die Frequenzressourcenzuweisungsgröße für den zweiten Rahmen, der als der NDP-Rahmen konfiguriert ist, fest ist, und
wobei in dem Fall, in dem der Zuweisungstypteil einen Rahmentyp anzeigt, der einen Datenbereich umfasst:
der zweite Rahmen als ein Rahmen konfiguriert wird, der einen Datenbereich aufweist, und
der Ressourcenzuweisungsgrößenteil in dem Auslöserrahmenkörperteil enthalten ist.

9. STA (150) nach Anspruch 8, wobei der erste Rahmen ein Auslöserrahmen oder ein Abfragerahmen oder ein Downlink-, DL-, Datenrahmen ist.

10. STA (150) nach Anspruch 8, wobei in dem Fall, in dem der Zuweisungstypteil den NDP-Rahmentyp anzeigt: der Auslöserrahmenkörperteil ferner wenigstens einen der folgenden aufweist: einen Bandbreitenteil, einen NDP-Typteil, einen Zuweisungsnummernteil, einen Ressourcengrößenteil, einen STA-Informationsteil und einen Hocheffizienz-Signalmodulations- und Kodierungsschema-, HE-SIG-MCS-, Teil.

## Revendications

1. Procédé d'émission d'une trame par une station, STA, (150) fonctionnant dans un système de réseau local sans fil, WLAN, le procédé comprenant :
la réception, à partir d'un point d'accès, AP (100), d'une première trame comprenant une partie de type d'allocation et une partie de corps de trame de déclenchement,
dans lequel la partie de corps de trame de déclenchement comprend des informations sur une allocation de ressources pour émettre une seconde trame ; et
l'émission, à l'AP (100), de la seconde trame sur la base des informations sur l'allocation de ressources,
dans lequel, dans le cas où la partie de type d'allocation indique un type de trame de paquet de données nul, NDP :
la seconde trame est configurée comme étant une trame NDP, et
une partie de taille d'allocation de ressources n'est pas incluse dans la partie de corps de trame de déclenchement lorsqu'une taille d'allocation de ressources de fréquence pour la seconde trame configurée comme étant la trame NDP est fixe, et dans lequel, dans le cas où la partie type d'allocation indique un type de trame incluant une région de données :
la seconde trame est configurée comme étant une trame comprenant une région de données, et
la partie de taille d'allocation de ressources est incluse dans la partie de corps de trame de déclenchement.

2. Procédé selon la revendication 1, dans lequel la première trame est l'une d'une trame de déclenchement, d'une trame de sondage et d'une trame de données de liaison descendante, DL.

3. Procédé selon la revendication 1, dans lequel dans le cas où la partie de type d'allocation indique le type de trame NDP : la partie de corps de trame de déclenchement comprend en outre au moins un parmi une partie de bande passante, une partie de type NDP, une partie de nombre d'allocations, une partie de taille de ressources, une partie d'informations de la STA et une partie de schéma de modulation et de codage de signal à haut rendement, HE-SIG MCS.

4. Procédé selon la revendication 1, dans lequel la partie de corps de trame de déclenchement comprend en outre des informations indiquant si la partie de taille de ressources est incluse dans les informations sur l'allocation de ressources.

5. Procédé selon la revendication 3, dans lequel la partie HE-SIG MCS n'est pas incluse dans la partie de corps de trame de déclenchement dans le cas où le MCS pour la seconde trame configurée comme étant la trame NDP est fixe et utilisé.

6. Procédé selon la revendication 1, dans lequel dans le cas où la partie de type d'allocation indique le type de trame NDP : la première trame comprend en outre des informations héritées et une partie SIG à haut rendement, HE.

7. Procédé selon la revendication 6, dans lequel la partie de type d'allocation et la partie de corps de trame de déclenchement sont incluses dans la partie HE-SIG.

8. Station, STA, (150) pour émettre une trame dans un système de réseau local sans fil, WLAN, la STA (150) comprenant :
un module émetteur-récepteur (180) configuré pour échanger des données avec un dispositif externe, et
un processeur (160) couplé au module émetteur-récepteur (180) et configuré pour :
recevoir, à partir d'un point d'accès, AP (100), une première trame comprenant une partie de type d'allocation et une partie de corps de trame de déclenchement,
dans laquelle la partie de corps de trame de déclenchement comprend des informations sur uneallocation de ressources pour émettre une seconde trame ; et
émettre, à l'AP (100), la seconde trame sur la base des informations sur l'allocation de ressources,
dans laquelle, dans le cas où la partie de type d'allocation indique un type de trame de paquet de données nul, NDP :
la seconde trame est configurée comme étant une trame NDP, et
une partie de taille d'allocation de ressources n'est pas incluse dans la partie de corps de trame de déclenchement lorsqu'une taille d'allocation de ressources de fréquence pour la seconde trame configurée comme étant la trame NDP est fixe, et dans laquelle, dans le cas où la partie de type d'allocation indique un type de trame incluant une région de données :
la seconde trame est configurée comme étant une trame comprenant une région de données, et
la partie de taille d'allocation de ressources est incluse dans la partie de corps de trame de déclenchement.

9. STA (150) selon la revendication 8, dans laquelle la première trame est l'une d'une trame de déclenchement, d'une trame de sondage et d'une trame de données de liaison descendante, DL.

10. STA (150) selon la revendication 8, dans laquelle, dans le cas où la partie de type d'allocation indique le type de trame NDP : la partie de corps de trame de déclenchement comprend en outre au moins un parmi une partie de bande passante, une partie de type NDP, une partie de nombre d'allocations, une partie de taille de ressources, une partie d'informations de la STA et une partie de schéma de modulation et de codage de signal à haut rendement, HE-SIG MCS.
